(19) Europäisches Patentamt
European Patent Office
Office européen des brevets

(11) **EP 4 757 405 A1**

(12) **EUROPEAN PATENT APPLICATION**
published in accordance with Art. 153(4) EPC

(43) Date of publication:
**10.06.2026 Bulletin 2026/24**

(21) Application number: **23962564.3**

(22) Date of filing: **26.12.2023**

(51) International Patent Classification (IPC):
**H04W 28/04** *(2009.01)*

(52) Cooperative Patent Classification (CPC):
**H04W 28/04**

(86) International application number:
**PCT/CN2023/142025**

(87) International publication number:
**WO 2025/137870 (03.07.2025 Gazette 2025/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventor: **ZHAO, Nande
Dongguan, Guangdong 523860 (CN)**

(74) Representative: **Taor, Simon Edward William et al
Venner Shipley LLP
TIDE Bankside
8 Emerson Street
London SE1 9DU (GB)**

(54) **CHANNEL TRANSMISSION METHOD, DEVICE, AND STORAGE MEDIUM**

(57) The present application provides a channel transmission method, a device, and a storage medium. The method includes: a terminal device receives a first physical downlink control channel (PDCCH) repeated transmission, the first PDCCH repeated transmission corresponding to a plurality of candidate PDCCHs.

A terminal device receives transmission of first physical downlink control channel (PDCCH) repetition, where the transmission of first PDCCH repetition corresponds to a plurality of PDCCH candidates — S601

**FIG. 6**

Processed by Luminess, 75001 PARIS (FR)

## Description

TECHNICAL FIELD

Embodiments of the present disclosure relate to the technical field of mobile communications, in particular to a channel transmission method, a channel transmission device, and a storage medium.

BACKGROUND

In related technologies, the reliability of physical downlink control channel (PDCCH) transmission can be improved by using a joint transmission mechanism of multiple base stations. Here, the multiple base stations may be multiple transmission and reception points (TRPs). Specifically, the same DCI, after being coded to form a coded bit, is sent by the multiple TRPs on an identical time-frequency resource or different time-frequency resources. The terminal may receive multiple PDCCHs on the time-frequency resources, respectively.

The foregoing scheme for improving the reliability of PDCCH transmission is applicable to the multi-TRP scenario, but is not applicable to a communication scenario of a single base station.

SUMMARY

Embodiments of the present disclosure provide a channel transmission method, a channel transmission device, and a storage medium.

According to an embodiment of the present disclosure, a channel transmission method is provided, and the method includes the following operation.

A terminal device receives transmission of first physical downlink control channel (PDCCH) repetition, where the transmission of first PDCCH repetition corresponds to a plurality of PDCCH candidates.

According to an embodiment of the present disclosure, a channel transmission method is provided, and the method includes the following operation.

A network device sends transmission of first physical downlink control channel (PDCCH) repetition to a terminal device, where the transmission of first PDCCH repetition corresponds to a plurality of PDCCH candidates.

According to an embodiment of the present disclosure, a terminal device is provided, and the terminal device includes a first communication unit.

The first communication unit is configured to receive transmission of first physical downlink control channel (PDCCH) repetition, where the transmission of first PDCCH repetition corresponds to a plurality of PDCCH candidates.

According to an embodiment of the present disclosure, a network device is provided, and the network device includes a second communication unit.

The second communication unit is configured to send transmission of first physical downlink control channel (PDCCH) repetition to a terminal device, where the transmission of first PDCCH repetition corresponds to a plurality of PDCCH candidates.

According to an embodiment of the present disclosure, a communication device is provided. The communication device may be the terminal device or the network device in the aforementioned technical schemes. The communication device includes a processor and a memory. The memory is configured to store a computer program, and the processor is configured to call and run the computer program stored in the memory to implement each of the channel transmission methods described above.

According to an embodiment of the present disclosure, a chip is provided, and the chip is configured to implement each of the channel transmission methods described above.

Specifically, the chip includes a processor. The processor is configured to call and run a computer program from a memory, to enable a device installed with the chip to implement each of the channel transmission methods described above.

According to an embodiment of the present disclosure, a computer-readable storage medium is provided. The computer-readable storage medium is configured to store a computer program, which enables a computer to implement each of the channel transmission methods described above.

According to an embodiment of the present disclosure, a computer program product is provided. The computer program product includes computer program instructions that enable a computer to implement each of the channel transmission methods described above.

According to an embodiment of the present disclosure, a computer program is provided. The computer program, when being executed on a computer, enables the computer to implement each of the channel transmission methods described above.

According to the above technical schemes, the terminal device receives the transmission of first PDCCH repetition through the plurality of PDCCH candidates, thereby realizing the transmission of first PDCCH repetition, and improving the reliability of the PDCCH transmission.

BRIEF DESCRIPTION OF THE DRAWINGS

The accompanying drawings illustrated herein are used to provide a further understanding of the present disclosure, and constitute a part of the present disclosure. The illustrative embodiments of the present disclosure and descriptions thereof are used to explain the present disclosure, and do not constitute any undue limitation of the present disclosure. In the drawings:

FIG. 1 is a schematic diagram of an application scenario of an embodiment of the present disclosure.

FIG. 2 is a schematic diagram of an architecture of another communication system according to an embodiment of the present disclosure.

FIG. 3 is a schematic diagram of an architecture of another communication system according to an embodiment of the present disclosure.

FIG. 4 is a schematic diagram of an architecture of another communication system according to an embodiment of the present disclosure.

FIG. 5 is a schematic diagram of an architecture of another communication system according to an embodiment of the present disclosure.

FIG. 6 is an optional schematic flow diagram of a channel transmission method according to an embodiment of the present disclosure.

FIG. 7 is an optional schematic flow diagram of a channel transmission method according to an embodiment of the present disclosure.

FIG. 8 is an optional schematic diagram of a first PDCCH monitoring occasion according to an embodiment of the present disclosure.

FIG. 9 is an optional schematic diagram of a first PDCCH monitoring occasion according to an embodiment of the present disclosure.

FIG. 10 is an optional schematic diagram of a first PDCCH monitoring occasion according to an embodiment of the present disclosure.

FIG. 11 is an optional schematic diagram of a first PDCCH monitoring occasion according to an embodiment of the present disclosure.

FIG. 12 is an optional schematic diagram of a first PDCCH monitoring occasion according to an embodiment of the present disclosure.

FIG. 13 is an optional schematic diagram of a first PDCCH monitoring occasion according to an embodiment of the present disclosure.

FIG. 14 is an optional schematic diagram of a first PDCCH monitoring occasion according to an embodiment of the present disclosure.

FIG. 15 is an optional schematic diagram of a first PDCCH monitoring occasion according to an embodiment of the present disclosure.

FIG. 16 is an optional schematic diagram of a first PDCCH monitoring occasion according to an embodiment of the present disclosure.

FIG. 17 is an optional schematic structural diagram of a terminal device according to an embodiment of the present disclosure.

FIG. 18 is an optional schematic structural diagram of a network device according to an embodiment of the present disclosure.

FIG. 19 is a schematic structural diagram of a communication device according to an embodiment of the present disclosure.

FIG. 20 is a schematic structural diagram of a chip according to an embodiment of the present disclosure.

sure.

FIG. 21 is a schematic block diagram of a communication system according to an embodiment of the present disclosure.

DETAILED DESCRIPTION

Hereinafter, the technical schemes in the embodiments of the present disclosure are described in the following with reference to the accompanying drawings in the embodiments of the present disclosure. It is apparent that the described embodiments are part of the embodiments of the present disclosure, but not all of the embodiments. Based on the embodiments of the present disclosure, all other embodiments acquired by those skilled in the art without creative efforts shall fall within the scope of protection of the present disclosure.

Communication system scenarios include a terrestrial Network (TN) scenario and a non-terrestrial network (NTN) scenario. Herein, the NTN typically provides communication services to ground users by using satellite communication. The NTN system currently includes a new radio (NR)-NTN system and an Internet of things (IoT)-NTN system, and may include other NTN systems in the future.

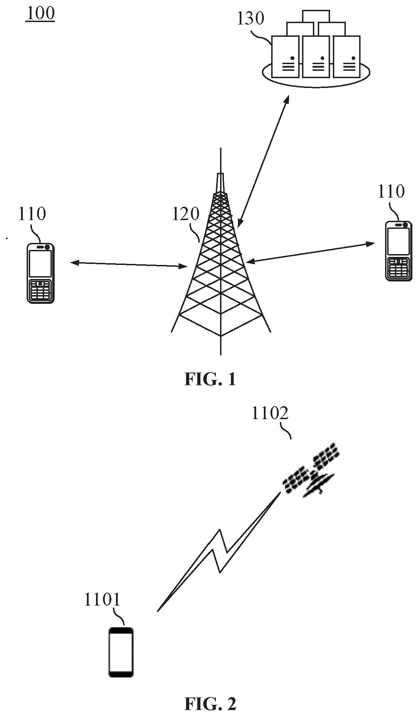

FIG. 1 is a schematic diagram of an architecture of a communication system according to an embodiment of the present disclosure. As shown in FIG. 1, a communication system 100 may include terminal devices 110 and a network device 120. The network device 120 may communicate with the terminal devices 110 over an air interface. Multi-service transmission is supported between the terminal devices 110 and the network device 120.

It should be understood that, in the embodiments of the present disclosure, the communication system 100 is only used as an example for illustrative purpose, but the embodiments of the present disclosure are not limited thereto. That is, the technical schemes in the embodiments of the present disclosure may be applied to various communication systems, such as: a long term evolution (LTE) system, an LTE time division duplex (TDD), a universal mobile telecommunication system (UMTS), an Internet of things (IoT) system, a narrow band IoT (NB-IoT) system, an enhanced machine-type communication (eMTC) system, a 5th generation (5G) communication system (also referred to as a new radio (NR) communication system), or a future communication system, etc.

In the communication system 100 shown in FIG. 1, the network device 120 may be an access network device that communicates with the terminal devices 110. The access network device may provide communication coverage for a specific geographic area and may communicate with the terminal devices 110 (e.g., user equipment (UE)) located within the coverage.

The network device 120 may be an evolutional node B (eNB or eNodeB) in an LTE system, a next generation radio access network (NG RAN) device, or a base station (gNB) in an NR system, or a wireless controller in a cloud radio access network (CRAN). Alternatively, the network device 120 may be a relay station, an access point, a vehicle-mounted device, a wearable device, a hub, a switch, a bridge, a router, or a network device in a future evolutional public land mobile network (PLMN), etc.

The terminal devices 110 may be any terminal device, which includes but not limited to the terminal device(s) that are connected to the network device 120 or other terminal device(s) via wired or wireless connections.

For example, each of the terminal devices 110 may refer to an access terminal, a UE, a user unit, a user station, a mobile station, a mobile site, a remote station, a remote terminal, a mobile device, a user terminal, a terminal, a wireless communication device, a user agent, or a user apparatus. The access terminal may be a cellular phone, a cordless phone, a session initiation protocol (SIP) phone, an IoT device, a satellite handheld terminal, a wireless local loop (WLL) station, a personal digital assistant (PDA), a handheld device with wireless communication capabilities, a computing device or another processing device connected to a wireless modem, a vehicle-mounted device, a wearable device, a terminal device in a 5G network, or a terminal device in future evolutional networks, etc.

The terminal devices 110 may be used for device to device (D2D) communication.

The wireless communication system 100 may further include a core network device 130 that communicates with the base station. The core network device 130 may be a 5G Core (5GC) device, such as an access and mobility management function (AMF), an authentication server function (AUSF), a user plane function (UPF), or a session management function (SMF). Optionally, the core network device 130 may also be an evolved packet core (EPC) device in the LTE network, such as a session management function + core packet gateway (SMF+PGW-C) device. It should be understood that the SMF+PGW-C may simultaneously implement functions of both the SMF and the PGW-C. During network evolution process, the aforementioned core network device may also be referred to by other names, or new network entities may be formed by dividing functions of the core network, and no limits are made thereto in the embodiments of the present disclosure.

Various functional units in the communication system 100 may further establish connections through next generation (NG) interface(s) for realizing communication.

For example, the terminal device may establish an air interface connection with the access network device through a Uu interface for transmitting user plane data and control plane signaling. The terminal device may establish a control plane signaling connection with the AMF through an NG interface 1 (referred to as N1).

The access network device, such as a next generation wireless access base station (gNB), may establish a user plane data connection with the UPF through an NG interface 3 (referred to as N3). The access network device may establish a control plane signaling connection with the AMF through an NG interface 2 (referred to as N2). The UPF may establish a control plane signaling connection with the SMF through an NG interface 4 (referred to as N4). The UPF may interact user plane data with the data network through an NG interface 6 (referred to as N6). The AMF may establish a control plane signaling connection with the SMF through an NG interface 11 (referred to as N11). Additionally, the SMF may establish a control plane signaling connection with a policy control function (PCF) through an NG interface 7 (referred to as N7).

One base station, one core network device and two terminal devices are exemplarily illustrated in FIG. 1. Optionally, the wireless communication system 100 may include multiple base station devices, and another number of terminal devices may be included in the coverage of each base station. No limits are made thereto in the embodiments of the present disclosure.

3GPP is currently researching non-terrestrial network (NTN) technology, which typically utilizes satellite communication to provide communication services to terrestrial users. Compared with terrestrial cellular network communication, the satellite communication has many unique advantages. Firstly, the satellite communication is not limited by geographical location of the user. For example, general land communications cannot cover oceans, mountains, deserts, and other areas where the communication device(s) cannot be set up or where the communication coverage(s) are not available due to sparse population. However, for the satellite communication, since a single satellite can cover vast terrestrial areas and the satellite can make orbit motion around the Earth, theoretically every corner of the Earth can be covered by the satellite communication. Secondly, the satellite communication has significant social value. The satellite communication may enable a cost-effective coverage in remote mountainous areas, poor and underdeveloped countries or regions, which allows people in such areas to access advanced voice communication and mobile Internet technology. This is conductive to narrowing the digital divide with developed regions and promoting the development in such areas. Thirdly, the satellite communication can offer long-distance coverage without a significant increase in communication cost as communication distance increases. Finally, the satellite communication has high stability and is not limited by natural disasters.

The NTN technology may be combined with various communication systems. For example, the NTN technology may be combined with an NR system to form an NR-NTN system. For another example, the NTN technology may be combined with an IoT system to form an IoT-NTN system. As an example, the IoT-NTN system may include an NB-IoT-NTN system and an eMTC-NTN system.

FIG. 2 is a schematic diagram of an architecture of another communication system according to an embodiment of the present disclosure.

As shown in FIG. 2, a communication system includes a terminal device 1101 and a satellite 1102. Wireless communication may be performed between the terminal device 1101 and the satellite 1102. The network formed between the terminal device 1101 and the satellite 1102 may also be referred to as an NTN. In the communication system architecture shown in FIG. 2, the satellite 1102 may have the function(s) of a base station, and the terminal device 1101 may directly communicate with the satellite 1102. Under the system architecture, the satellite 1102 may be referred to as a network device. In some embodiments of the present disclosure, the communication system may include multiple network devices 1102, and another number of terminal devices may be included within the coverage of each network device 1102. No limits are made thereto in the embodiments of the present disclosure.

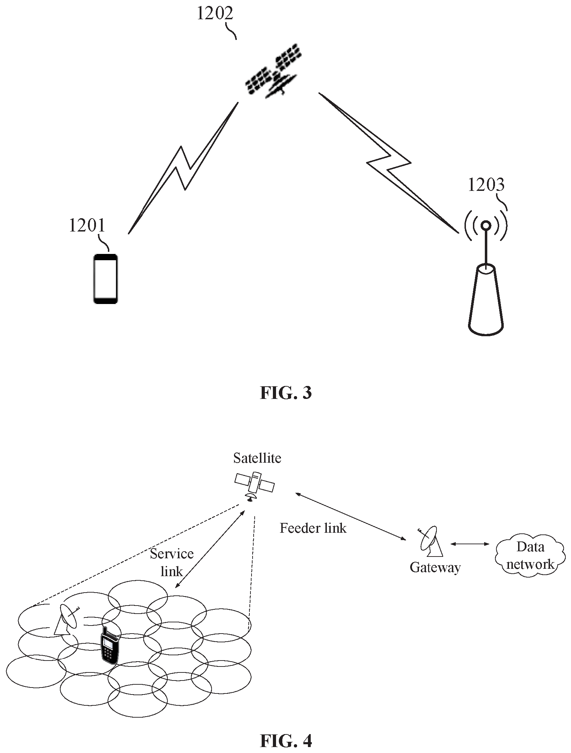

FIG. 3 is a schematic diagram of an architecture of another communication system according to an embodiment of the present disclosure.

As shown in FIG. 3, a communication system includes a terminal device 1201, a satellite 1202, and a base station 1203. Wireless communication may be performed between the terminal device 1201 and the satellite 1202, and communication may be performed between the satellite 1202 and the base station 1203. The network formed among the terminal device 1201, the satellite 1202 and the base station 1203 may also be referred to as an NTN. In the communication system architecture shown in FIG. 3, the satellite 1202 may not have the function(s) of the base station, and communication between the terminal device 1201 and the base station 1203 needs to be relayed through the satellite 1202. Under the system architecture, the base station 1203 may be referred to as a network device. In some embodiments of the present disclosure, the communication system may include multiple network devices 1203, and another number of terminal devices may be included within the coverage of each network device 1203. No limits are made thereto in the embodiments of the present disclosure. The network device 1203 may be the network device 120 in FIG. 1.

It should be understood that the aforementioned satellite 1102 or satellite 1202 includes, but is not limited to: a low-Earth orbit (LEO) satellite, a medium-Earth orbit (MEO) satellite, a geostationary Earth orbit (GEO) satellite, a high elliptical orbit (HEO) satellite, etc.

Multiple beams may be used for the satellite to cover the ground. For example, one satellite may form dozens or even hundreds of beams to cover the ground. In other words, each satellite beam may cover a ground area with a diameter ranging from tens to hundreds of kilometers, thereby ensuring satellite coverage and enhancing the system capacity of the entire satellite communication system.

As an example, an altitude range of the LEO satellite may be from 500 kilometers to 1500 kilometers, and a corresponding orbital period may be about 1.5 hours to 2 hours. A signal propagation delay for single-hop communication between users may generally be less than 20 milliseconds, and the maximum satellite visibility duration may be 20 minutes. The LEO satellite has a short signal propagation distance and low link loss, and does not have a high requirement on the transmission power of user terminal(s). An orbit altitude of the GEO satellite may reach 35786 km, and a rotation period around the Earth may be 24 hours. A signal propagation delay for the single-hop communication between users may generally be 250 milliseconds.

In order to ensure the satellite coverage and enhance the system capacity of the entire satellite communication system, the satellite uses multiple beams to cover the ground. A satellite may form dozens or even hundreds of beams to cover the ground. Each satellite beam may cover a ground area with a diameter ranging from tens to hundreds of kilometers.

It should be noted that FIGS. 1 to 3 are merely illustrative examples of the system in which the present disclosure is applied. Of course, the methods shown in the embodiments of the present disclosure may further be applied to other systems. In addition, terms "system" and "network" are often used interchangeably in the present disclosure. A term "and/or" in the present disclosure is only an association relationship describing associated objects, and indicates that there may be three relationships. For example, A and/or B may indicate three cases: existence of A alone, existence of A and B simultaneously, and existence of B alone. Furthermore, a character "/" in the present disclosure generally indicates that preceding and following associated objects are in an "or" relationship. It should also be understood that "indicate" mentioned in the embodiments of the present disclosure may be a direct indication or an indirect indication, or may mean that there is an association relationship. For example, A indicates B, which may mean that A indicates B directly (e.g., B may be acquired through A), or may mean that A indicates B indirectly (e.g., A indicates C, and B may be acquired through C), or may mean that there is an association relationship between A and B. It should also be understood that "correspond" mentioned in the embodiments of the present disclosure may mean that there is a direct correspondence relationship or an indirect correspondence relationship between two objects, or may mean that there is an association relationship between the two objects, or may mean that there are relationships of indicating and being indicated, configuring and being configured, and the like. It should also be understood that "predefined" or "predefined rule(s)" mentioned in the embodiments of the present disclosure may be implemented by pre-storing corresponding code(s), table(s), or other ways that may be used to indicate related information in devices (e.g., including the terminal device and the network device), and the specific implementation(s) are not limited in the present disclosure. For example, the "predefined" may refer to those defined in a protocol. It should also be understood that, in the embodiments of the present disclosure, the term "protocol" may refer to a standard protocol in the field of communications, such as a LTE protocol, a NR protocol, and a related protocol applied in a future communication system, which is not limited in the present disclosure.

Satellites may be classified into two types in terms of the functions they provide: transparent payload and regenerative payload. For a transparent payload satellite, only functions of wireless frequency filtering, frequency conversion and amplification are provided; and only transparent forwarding for the signal is provided without changing the waveform signal that is forwarded. For a regenerative payload satellite, in addition to providing the functions of wireless frequency filtering, frequency conversion and amplification, it may further provide demodulation/decoding, routing/conversion, coding/modulation functions, and have some or all of functions of the base station.

In the NTN, one or more gateways may be included for communication between the satellite and the terminal.

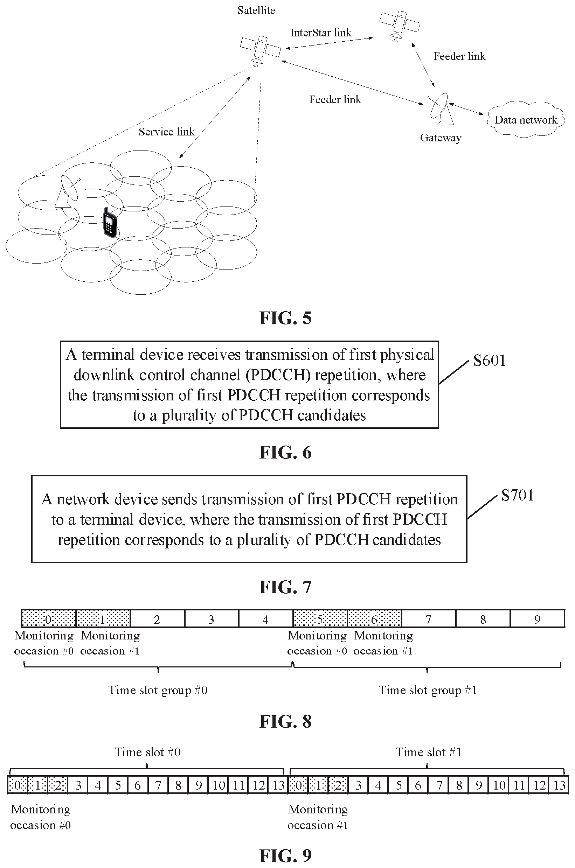

FIGS. 4 and 5 respectively illustrate schematic diagrams of NTN scenarios based on a transparent payload satellite and regenerative payload satellites.

As shown in FIG. 4, for the NTN scenario based on the transparent payload satellite, the commutation between a gateway and a satellite may be performed through a feeder link, and the commutation between the satellite and a terminal may be performed through a service link. As shown in FIG. 5, for the NTN scenario based on the regenerative payload satellites, the commutation between a satellite and a satellite may be performed through an InterStar link, the commutation between a gateway and the satellites may be performed through feeder links, and the commutation between the satellite and a terminal may be performed through a service link.

In order to facilitate the understanding of the technical schemes in the embodiments of the present disclosure, the related technologies of the embodiments of the present disclosure are described below. The following related technologies, as optional solutions, may be combined arbitrarily with the technical schemes in the embodiments of the present disclosure, and all of the combinations fall within the scope of protection of the embodiments of the present disclosure.

Design of PDCCH structure in NR System

A PDCCH is composed of one or more control channel elements (CCEs), and the number of CCEs constituting the PDCCH is referred as an aggregation level. The aggregation levels supported by PDCCH are shown in Table 1. One CCE is composed of six resource element groups (REGs). Herein, one REG is equal to the physical resource corresponding to one orthogonal frequency division multiplexing (OFDM) symbol in time domain and one resource block (RB) in frequency domain.

Table 1. Aggregation levels supported by PDCCH

| CCE Aggregation level | The number of CCEs |
|---|---|
| 1 | 1 |
| 2 | 2 |
| 4 | 4 |
| 8 | 8 |
| 16 | 16 |

Transmission of the PDCCH is performed within a control-resource set (CORESET), where one CORESET is composed of $N_{RB}^{CORESET}$ RBs in the frequency domain and $N_{symb}^{CORESET} \in \{1,2,3\}$ symbols in the time domain. The REGs within one CORESET are numbered in ascending order starting from 0, in a manner of prioritizing the time domain, beginning with the first OFDM symbol and the lowest RB of the CORESET.

PDCCH monitoring in NR system

For each downlink bandwidth part (BWP) of a serving cell, the higher layer configures S ≤ 10 search space sets for the terminal device. For each search space set, the following configuration information is provided:

an index s of the search space set, where 0 < s < 40;
a CORESET p associated with the search space set s;
time slots of PDCCH monitoring period $k_s$ and time slots of PDCCH monitoring offset $o_s$;
a PDCCH monitoring pattern in a time slot, which is the first symbol of the CORESET for monitoring the PDCCH in the time slot;
the number $T_s$ of continuous time slots for each duration of the search space set s, where $T_s < k_s$;
the number $M_s^{(L)}$ of PDCCH candidates corresponding to the aggregation level L = 1,2,4,8,16, respectively.

For the search space set s, the terminal device determines the PDCCH monitoring occasion(s) based on the PDCCH monitoring period $k_s$, the PDCCH monitoring offset $o_s$ and the PDCCH monitoring pattern in the time slot. That is, if $\left( n_f \cdot N_{slot}^{frame,\mu} + n_{s,f}^{\mu} - o_s \right) \bmod k_s = 0$

is satisfied, the terminal device determines that the PDCCH monitoring occasion exists in the time slot $n_{s,f}^{\mu}$ of the frame $n_f$. Herein, $N_{\text{slot}}^{\text{frame},\mu}$ is the number of time slots in the frame. The terminal device monitors the PDCCH candidate(s) in the consecutive time slots $T_s$ starting from the time slot $n_{s,f}^{\mu}$, and does not monitor the PDCCH candidate(s) in the subsequent time slots $k_s$ - $T_s$. Furthermore, for the search space set s associated with the CORESET $p$ on the serving cell $n_{CI}$, when the aggregation level is $L$, the terminal device may determine, based on a predefined rule, a CCE index corresponding to the PDCCH candidate $m_{s,n_{CI}}^{(L)}$ at the PDCCH monitoring occasion. The $m_{s,n_{CI}}^{(L)}$ represents the index of the PDCCH candidate at the PDCCH monitoring occasion when being in the search space set s of the cell $n_{CI}$ and the aggregation level of $L$.

Type0-PDCCH monitoring occasion

The Type0-PDCCH is used to schedule a SIB1 message. For a synchronization signal/physical broadcast channel (PBCH) block (SSB) and CORESET0 multiplexing mode 1, the terminal device monitors the PDCCH in a Type0-PDCCH common search space (CSS) set over two time slots. Specifically, for a SSB#i, the terminal device determines a time slot $n_0 = \left(O \cdot 2^{\mu} + i \cdot M\right) mod N_{slot}^{frame,\mu}$, and the frame $SFN_C$ in which the time slot $n_0$ is located satisfies: if $\left\lfloor \left(O \cdot 2^{\mu} + \lfloor i \cdot M \rfloor\right) / N_{slot}^{frame,\mu} \right\rfloor mod 2 = 0$, then $SFN_C mod 2 = 0$; if $\left\lfloor \left(O \cdot 2^{\mu} + \lfloor i \cdot M \rfloor\right) / N_{slot}^{frame,\mu} \right\rfloor mod 2 = 1$, then $SFN_C mod 2 = 1$. Here, $N_{\text{slot}}^{\text{frame},\mu}$ is the number of time slots in the frame; $\mu$ is determined based on sub-carrier spacing (SCS) of the PDCCH in the CORESET0; M is used to control an overlap degree of Type0-PDCCH monitoring windows associated with the SSB#i and SSB#i+1, and the candidate values thereof include {1/2 (complete overlap), 1 (partial overlap), 2 (complete non-overlap)}; and $O$ is used to control a starting position of the Type0-PDCCH monitoring window associated with the SSB#i, and the candidate values thereof include {0, 2, 5, 7}.

For $\mu \in \{0,1,2,3\}$, the two time slots in which the Type0-PDCCH monitoring occasions associated with the SSB#i are located may be $n_0$ and $n_0$ + 1, and $M, O$ and an index of the first symbol of the CORESET (i.e., the Type0-PDCCH monitoring occasion) in the time slot $n_0$ / $n_0$ + 1 are indicated from the candidate value set according to an information bit carried by a physical broadcast channel (PBCH).

Reception of other system information (OSI), paging message and paging early indication (PEI)

For the reception of the OSI, paging message and PEI, the PDCCH monitoring occasion in the corresponding search space set is associated with the SSB that is actually sent. Taking the reception of the paging message as an example, the terminal device monitors a paging occasion (PO) in each DRX cycle to receive the paging message, where the PO is a group of PDCCH monitoring occasions.

If the index of the search space set is s = 0, the PDCCH monitoring occasion for paging is the same as the PDCCH monitoring occasion for the SIB1. If the index s of the search space set is configured to be a non-zero value, the PO is a set of S*X consecutive PDCCH monitoring occasions, where S is the number of SSBs that are actually transmitted, and X is the number of PDCCH monitoring occasions associated with each SSB. The (x*S+ K)-th PDCCH monitoring occasion used for paging in the PO may correspond to the K-th SSB that is transmitted, where x = 0, x -1, K = 1, 2,...,S.

The reception process of the OSI and PEI is similar to the reception process of the paging message, and will not be elaborated herein.

The above technical scheme does not support transmission of PDCCH repetition. Considering that the downlink coverage performance is limited due to the limited satellite transmission power in the NTN system, the terminal device may not detect the PDCCH at this time, which affects the data transmission process of the NTN system. Therefore, how to improve the PDCCH coverage performance is an urgent problem to be solved.

In order to facilitate the understanding of the technical schemes in the embodiments of the present disclosure, the technical schemes of the present disclosure are described in detail below through specific embodiments. The above related technologies, as optional solutions, may be combined arbitrarily with the technical schemes in the embodiments of the present disclosure, and all of the combinations fall within the scope of protection of the embodiments of the present disclosure. The embodiments of the present disclosure include at least part of the following content.

The embodiments of the present disclosure provide a channel transmission method, which is applied to a terminal device. As shown in FIG. 6, the method includes the following operation S601.

At block S601, the terminal device receives transmission of first PDCCH repetition, where the transmission of first PDCCH repetition corresponds to a plurality of PDCCH candidates.

The embodiments of the present disclosure provide a channel transmission method, which is applied to a network device. As shown in FIG. 7, the method includes the following operation S701.

At block S701, the network device sends transmission of first PDCCH repetition to a terminal device, where the transmission of first PDCCH repetition corresponds to a plurality of PDCCH candidates.

Hereinafter, the channel transmission method according to FIG. 6 or FIG. 7 of the embodiments of the present disclosure is described.

The network device sends the transmission of first PDCCH repetition by using the plurality of PDCCH candidates, and the terminal device receives the transmission of first PDCCH repetition sent by the network device on the plurality of PDCCH candidates that are monitored. That is, the network device sends the transmission of first PDCCH repetition on the plurality of PDCCH candidates, and the terminal device receives the transmission of first PDCCH repetition on the plurality of PDCCH candidates that are monitored.

The transmission of first PDCCH repetition corresponding to the plurality of PDCCH candidates may be understood that the plurality of PDCCH candidates are used for the transmission of first PDCCH repetition.

It can be understood that the transmission of first PDCCH repetition may be understood as transmission of the repetition of the first PDCCH, or the first PDCCH that is repeatedly transmitted. The first PDCCH is any PDCCH that is repeatedly transmitted.

It can be understood that a PDCCH monitoring occasion at which a PDCCH candidate used for the transmission of first PDCCH repetition is located may be referred to as a first PDCCH monitoring occasion. The first PDCCH monitoring occasion may also be described as the PDCCH monitoring occasion used for the transmission of first PDCCH repetition. Herein, one or more PDCCH candidates exist in one PDCCH monitoring occasion, and at least one PDCCH candidate of the one or more PDCCH candidates in the first PDCCH monitoring occasion is used for the transmission of first PDCCH repetition.

In an example, 16 PDCCH candidates exist in one PDCCH monitoring occasion, and the terminal device monitors on the PDCCH monitoring occasion, which may be understood as that the terminal device monitors the 16 PDCCH candidates in the PDCCH monitoring occasion, and receives the first PDCCH on one PDCCH candidate of the 16 PDCCH candidates that are monitored.

In an example, 16 PDCCH candidates exist in one PDCCH monitoring occasion, and the terminal device monitors on the PDCCH monitoring occasion, which may be understood as that the terminal device monitors the 16 PDCCH candidates in the PDCCH monitoring occasion, and receives the first PDCCH on two PDCCH candidates of the 16 PDCCH candidates that are monitored.

It can be understood that the network device sends the transmission of first PDCCH repetition to the terminal device on a plurality of first PDCCH monitoring occasions. The terminal device receives the transmission of first PDCCH repetition on the plurality of first PDCCH monitoring occasions.

In the embodiments of the present disclosure, the terminal device receives the first PDCCH that is repeatedly transmitted through the plurality of PDCCH candidates, thereby realizing the transmission of first PDCCH repetition, and improving the reliability of the PDCCH transmission.

In some embodiments, the plurality of PDCCH candidates are located at a plurality of first PDCCH monitoring occasions in an identical search space set.

The plurality of first PDCCH monitoring occasions at which the plurality of PDCCH candidates used for the transmission of first PDCCH repetition are located may be located in the identical search space set. That is, the transmission of PDCCH repetition is performed in the time domain.

In some embodiments, the plurality of first PDCCH monitoring occasions are located in one or more time slot groups, the time slot group includes one or more time slots, and the time slot group includes one or more first PDCCH monitoring occasions.

The plurality of first PDCCH monitoring occasions at which the plurality of PDCCH candidates used for the transmission of first PDCCH repetition are located may be located in one or more time slot groups. One time slot group is composed of one or more time slots. For one time slot group, one or more first PDCCH monitoring occasions are included.

It can be understood that, in the embodiments of the present disclosure, the transmission of PDCCH repetition is performed based on the time slot.

In some embodiments, the number of time slot groups required for the transmission of first PDCCH repetition is determined based on the repetition number of PDCCH transmission and the number of PDCCH monitoring occasions in the time slot group. For example, when the repetition number of PDCCH transmission is $N_{rep} = 4$ and the number of PDCCH monitoring occasions in the time slot group is $N_{MO}^{SG} = 1$, the terminal device determines that the number of time slot groups used for the transmission of PDCCH repetition is

$$N_{SG}^{rep} = N_{rep} / N_{MO}^{SG} = 4 .$$

In some embodiments, the number of time slots included in a first time slot group is greater than the number of first PDCCH monitoring occasions included in the first time slot group, and the first time slot group is one of the one or more time slot groups.

Alternatively, the number of time slots included in the first time slot group is equal to the number of first PDCCH monitoring occasions included in the first time slot group.

Alternatively, the number of time slots included in the first time slot group is less than the number of first PDCCH monitoring occasions included in the first time slot group.

For the first time slot group of the one or more time slot groups, the number ( $N_{slot}^{SG}$ ) of time slots included in the first time slot group may be greater than or equal to or less than the number ( $N_{MO}^{SG}$ ) of PDCCH monitoring occasions in the first time slot group. The first time slot group may be any one of the one or more time slot groups.

In an example, $N_{slot}^{SG}$ may be greater than $N_{MO}^{SG}$. For example, as shown in FIG. 8, each time slot group includes $N_{slot}^{SG} = 5$ time slots, and only each of the first two time slots in the time slot group has one first PDCCH monitoring occasion. That is, the number of first PDCCH monitoring occasions in the time slot group is

$N_{MO}^{SG} = 2$ , and in this time, $N_{slot}^{SG} > N_{MO}^{SG}$ .

In an example, $N_{slot}^{SG}$ may be equal to $N_{MO}^{SG}$. For example, each time slot in the time slot group has one first PDCCH monitoring occasion, and in this time, $N_{slot}^{SG} = N_{MO}^{SG}$ .

In an example, $N_{slot}^{SG}$ may be less than $N_{MO}^{SG}$. For example, each time slot in the time slot group has two first PDCCH monitoring occasions, and in this time, $N_{slot}^{SG} < N_{MO}^{SG}$ .

In the embodiments of the present disclosure, there is no specific limitation on the size relationship of $N_{slot}^{SG}$ and $N_{MO}^{SG}$ .

In some embodiments, if the plurality of first PDCCH monitoring occasions are located in the plurality of time slot groups, a first time slot in each of different time slot groups is identical, and the first time slot is a time slot in which a first PDCCH monitoring occasion in the time slot group is located.

In the time slot group, the time slot used for monitoring the first PDCCH is the first time slot. That is, the first time slot is the time slot in which the first PDCCH monitoring occasion in the time slot group is located.

The time slot index of the first time slot used for monitoring the PDCCH in each time slot group may be identical. For example, as shown in FIG. 8, the monitoring occasion #0 in the time slot group #0 exists in the time slot #0 of the time slot group #0; the monitoring occasion #1 in the time slot group #0 exists in the time slot #1 of the time slot group #0; the monitoring occasion #0 in the time slot group #1 exists in the time slot #0 of the time slot group #1; and the monitoring occasion #1 in the time slot group #1 exists in the time slot #1 of the time slot group #1. That is, the first PDCCH monitoring occasions exist in the first time slot and the second time slot of both the time slot group #0 and the time slot group #1. Thus, the terminal device monitors the first PDCCH in each time slot group by the same PDCCH monitoring pattern.

In some embodiments, an index of a symbol corresponding to a first PDCCH monitoring occasion in each of different first time slots is identical, and the first time slot is a time slot in which the first PDCCH monitoring occasion in the time slot group is located.

The first PDCCH monitoring occasion in each of the different first time slots may correspond to the same symbol(s) in the corresponding first time slot.

In one example, in FIG. 9, taking the time slot #0 and the time slot #1 shown in FIG. 8 as an example, in the two time slots for monitoring the PDCCH, the symbols corresponding to the first PDCCH monitoring occasion (or CORESET) are symbols #0 to #2. Herein, the symbols in the time slot #0 corresponding to the monitoring occasion #0 are symbols #0 to #2, and the symbols in the time slot #1 corresponding to the monitoring occasion #1 are symbols #0 to #2.

It can be understood that, in a case where the first PDCCH monitoring occasion in each of different first time slots corresponds to the same symbol(s) in the corresponding first time slot, for each of the plurality of first time slots, the time slot index of the first time slot in the time slot group in which the first time slot is located may be identical or different.

It can be understood that, in a case where the index of the first time slot used for monitoring the PDCCH in each time slot group is identical, the first PDCCH monitoring occasion in each of the different first time slots may correspond to identical or different symbol(s) in the corresponding first time slot.

In some embodiments, a time-domain position of the one or more first PDCCH monitoring occasions is determined based on one or more of the following in first information:

the number of time slots included in the time slot group;
an index of a first time slot in the time slot group, where the first time slot is a time slot in which a first PDCCH monitoring occasion in the time slot group is located; and
a symbol corresponding to the first PDCCH monitoring occasion in the first time slot.

The terminal device or the network device determines the time-domain position of the first PDCCH monitoring occasion based on one or more of the following in the first information: the number of time slots included in the time slot group; the index of the first time slot in the time slot group; and the symbol corresponding to the first PDCCH monitoring occasion in the time slot.

In one example, the terminal device firstly determines the time-domain position corresponding to the first PDCCH monitoring occasion(s) based on search space set configuration information. Then, starting from one of the first PDCCH monitoring occasion(s), the terminal device determines one or more time slot groups based on the number of time slots included in the time slot group and the number of time slot groups required for the transmission of first PDCCH repetition, to perform the transmission of first PDCCH repetition. Herein, the time-domain position of the first PDCCH monitoring occasion(s) in the time slot group is determined based on the index of the time slot used for monitoring the first PDCCH in the time slot group and the index of the symbol corresponding to the first PDCCH monitoring occasion in the time slot.

In some embodiments, the first information is determined based on a predefined rule and/or search space set configuration information.

Based on the predefined rule and/or the search space set configuration information, the terminal device or the network device determines at least one of the following: the number of time slots included in the time slot group; the index of the time slot used for monitoring the PDCCH in the time slot group; or, the symbol(s) corresponding to the first PDCCH monitoring occasion in the time slot.

In one example, the predefined rule is a determination rule for the Type0-PDCCH monitoring occasion.

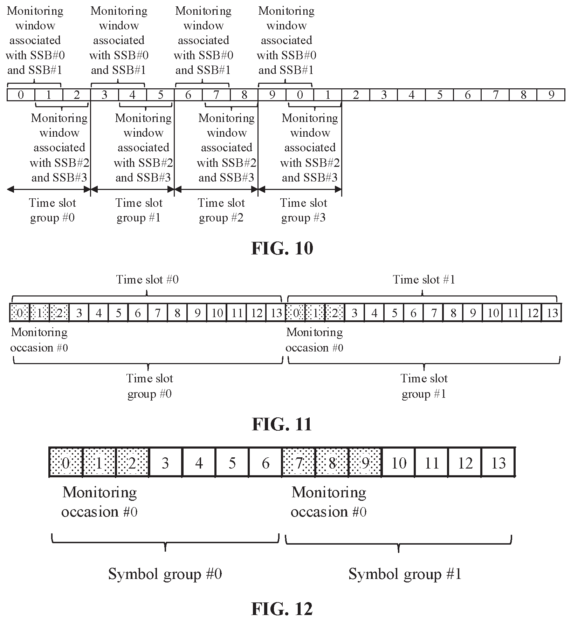

Taking the predefined rule as the determination rule for the Type0-PDCCH monitoring occasion as an example, the terminal device or the network device may determine a time slot group corresponding to transmission of Type0-PDCCH repetition and an index of a time slot used for monitoring the PDCCH in the time slot group. In one example, as shown in FIG. 10, taking $M = 1 / 2, O = 0$ as an example, in order to avoid collision between Type0-PDCCH monitoring occasions associated with different SSBs during the transmission of PDCCH repetition, the terminal device determines that the number $N_{slot}^{SG}$ of time slots included in the time slot group used for the transmission of PDCCH repetition is greater than 3, i.e., the time slot group includes $N_{slot}^{SG} \geq 3$ time slots. Taking

$$N_{slot}^{SG} = 3$$ as an example, for each of the time slot groups that include a time slot group #0, a time slot group #1, a time slot group #2 and a time slot group #3, the PDCCH monitoring occasions (monitoring windows) associated with SSB #0 and SSB #1 exist in the first time slot (time slot #0) and the second time slot (time slot #1); and the PDCCH monitoring occasions associated with SSB #2 and SSB #3 exist in the second time slot and the third time slot (time slot #2). In addition, when the terminal device determines the time slot used for monitoring the PDCCH in the time slot group, it is also necessary to avoid collision between the PDCCH monitoring occasions associated with different SSBs.

In a case where M and O are configured with other values, when the terminal device or the network device determines the number of time slots included in the time slot group and the time slots used for monitoring the PDCCH in the time slot group, it is also necessary to ensure that the Type0-PDCCH monitoring occasions associated with different SSBs do not collide.

Based on the search space set configuration information, the terminal device or the network device may determine the time slot group and the symbol(s) corresponding to the first PDCCH monitoring occasion in the time slot within the time slot group. In an example, as shown in FIG. 11, for the search space set s, the terminal device determines that the PDCCH monitoring occasion 0 exists in the time slot #0, and the PDCCH monitoring occasion 0 corresponds to the symbols #0 to #2; then, for the transmission of PDCCH repetition, the terminal device determines that each of the time slot groups used for the transmission of PDCCH repetition includes $N_{slot}^{SG} = 1$ time slot, and the PDCCH monitoring occasions in the time slot groups all correspond to the symbols #0 to #2. At this time, the time slot group #1 includes one time slot: the time slot #1; and the symbols #0 to #2 in the time slot #1 correspond to the PDCCH monitoring occasion in the time slot group #1.

In some embodiments, the search space set configuration information includes, but is not limited to, one or more of the following information:

a CORESET associated with the search space;
a PDCCH monitoring period;
a PDCCH monitoring offset;
a PDCCH monitoring pattern in the time slot;
the number of continuous time slots;
the number of PDCCH monitoring occasions in the time slot; and
the number of PDCCH candidates corresponding to the aggregation level of L=1, 2, 4, 8, and 16, respectively.

In the embodiments of the present disclosure, based on the index of the symbol corresponding to CORESET0 in the time slot $n_0$ / $n_0$ + 1 by higher layer configuration, the terminal device or the network device may determine the symbol corresponding to the Type0-PDCCH monitoring occasion in the time slot within the time slot group, Herein, the higher layer configuration is provided by the search space set configuration information. For example, the index of the symbol in the time slot corresponding to the Type0-PDCCH monitoring occasion in the time slot group is identical to the index of the symbol corresponding to the CORESET in the time slot $n_0$ / $n_0$ + 1 by the higher layer configuration.

In some embodiments, the plurality of first PDCCH monitoring occasions are located in one or more symbol groups, the symbol group includes one or more symbols, and the symbol group includes one or more first PDCCH monitoring occasions.

The plurality of first PDCCH monitoring occasions at which the plurality of PDCCH candidates used for the transmission of first PDCCH repetition are located may be located in one or more symbol groups. One symbol group is composed of one or more symbols. For one symbol group, one or more first PDCCH monitoring occasions are included.

It can be understood that, in the embodiments of the present disclosure, the transmission of PDCCH repetition may be performed based on the symbol.

In some embodiments, the number of symbol groups required for the transmission of first PDCCH repetition is determined based on the repetition number of the first PDCCH transmission and the number of PDCCH monitoring occasions in the symbol group. For example, when the repetition number of PDCCH transmission is $N_{rep} = 4$ and the number of PDCCH monitoring occasions in the symbol group is $N_{MO}^{SymG} = 1$, the terminal device determines that the number of time slot groups used for the transmission of PDCCH repetition is

$$N_{SymG}^{rep} = N_{rep} / N_{MO}^{SymG} = 4 .$$

In some embodiments, the number of symbols included in a first symbol group is greater than or equal to the number of symbols occupied by a first PDCCH monitoring occasion.

In the embodiments of the present disclosure, the number of symbols ($N_{sym}^{SG}$) included in the symbol group is required to be greater than or equal to the number of symbols ($N_{symb}^{CORESET}$) occupied by the CORESET on the first PDCCH monitoring occasion. In one example, as shown in FIG. 12, when the number of CORESET symbols on the PDCCH monitoring occasion is $N_{symb}^{CORESET} = 3$, the number of the symbols in the symbol group is required to satisfy $N_{sym}^{SG} \geq 3$, for example, $N_{sym}^{SG} = 7$.

In some embodiments, if the plurality of first PDCCH monitoring occasions are located in a plurality of symbol groups, an index of a symbol corresponding to a first PDCCH monitoring occasion in each of different symbol groups is identical.

In one example, as shown in FIG. 12, in the symbol group #0 and symbol group #1, the symbols corresponding to the PDCCH monitoring occasions are the symbols #0 to #2. Here, the symbols #7 to #13 shown in FIG. 12 are the symbols #0 to #6 in the symbol group #1.

It should be noted that, if the plurality of first PDCCH monitoring occasions are located in the plurality of symbol groups, the index of the symbol corresponding to the first PDCCH monitoring occasion in each of different symbol groups may be different.

In some embodiments, a time-domain position of the one or more first PDCCH monitoring occasions is determined based on one or more of the following in second information:

the number of symbols included in the symbol group; and
an index of a first symbol in the symbol group, where the first symbol is a symbol in which a first PDCCH monitoring occasion in the symbol group is located.

The terminal device or the network device determines the time-domain position of the first PDCCH monitoring occasion used for the transmission of first PDCCH repetition based on one or more of the following in the second information: the number of symbols included in the symbol group; and, the index of the symbol used for monitoring the PDCCH in the symbol group.

In an example, the terminal device firstly determines the time-domain position corresponding to the first PDCCH monitoring occasion(s) based on the search space set configuration information. Then, starting from one of the first PDCCH monitoring occasion(s), the terminal device determines one or more symbol groups based on the number of symbols included in the symbol group and the number of symbol groups required for the transmission of first PDCCH repetition, to perform the transmission of first PDCCH repetition. Herein, the corresponding time-domain position of the first PDCCH monitoring occasion(s) in the symbol group is determined based on the index of the symbol used for monitoring the PDCCH in the symbol group.

In some embodiments, the second information is determined based on a predefined rule and/or search space set configuration information.

Based on the predefined rule and/or the search space set configuration information, the terminal device determines at least one of the following: the number of symbols included in the symbol group; or, the index of the first symbol used for monitoring the PDCCH in the symbol group.

In one example, the predefined rule is a determination rule for the Type0-PDCCH monitoring occasion.

Taking the predefined rule as the determination rule for the Type0-PDCCH monitoring occasion as an example, the terminal device or the network device may determine the symbol group corresponding to transmission of Type0-PDCCH repetition and the index of the symbol used for monitoring the PDCCH in the symbol group.

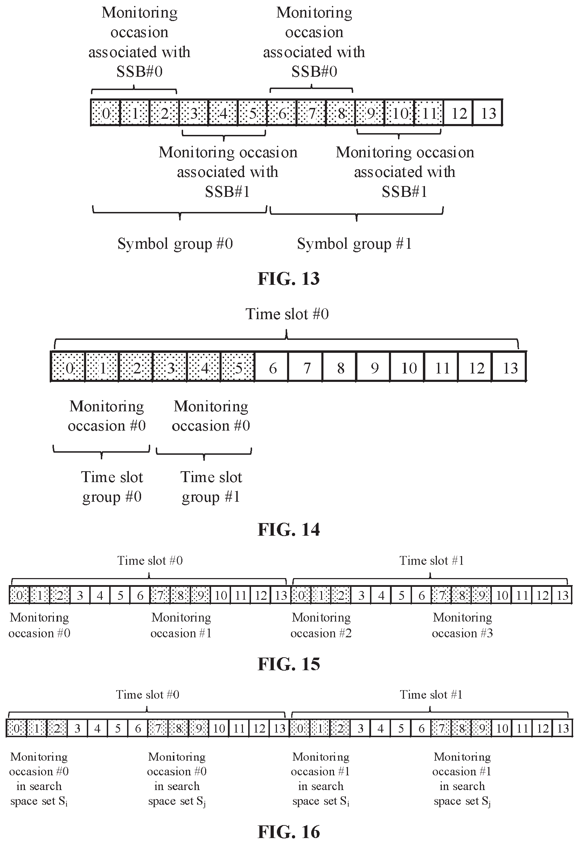

In one example, as shown in FIG. 13, when configuring $M = 1 / 2$, $O = 0$, and the number of CORESET0 symbols as $N_{symb}^{CORESET} = 3$, the PDCCH monitoring occasions associated with the SSB #0 may correspond to the symbols #0 to #2, and the PDCCH monitoring occasions associated with the SSB #1 corresponds to the symbols #3 to #5. In order to avoid collision between Type0-PDCCH monitoring occasions associated with different SSBs during the transmission of PDCCH repetition, the terminal device determines that the symbol group used for the transmission of PDCCH repetition includes $N_{sym}^{SG} \geq 6$ symbols. Furthermore, taking $N_{sym}^{SG} = 6$ as an example, as shown in FIG. 13, for one symbol group that includes six symbols, the terminal device determines that the symbols #0 to #2 in the symbol group correspond to the PDCCH monitoring occasions associated with the SSB#0, and the symbols #3 to #5 in the symbol group correspond to the PDCCH monitoring occasions associated with the SSB #1, thereby avoiding the collision between PDCCH monitoring occasions associated with different SSBs.

Based on the search space set configuration information, the terminal device or the network device may determine the symbol group and the index of the symbol used for monitoring the PDCCH in the symbol group.

In one example, as shown in FIG. 14, for the search space set $s$, the terminal device determines that the PDCCH monitoring occasion in the time slot #0 corresponds to the symbols #0 to #2. Then, for the transmission of PDCCH repetition, the terminal device determines that the symbol group used for the transmission of PDCCH repetition includes $N_{sym}^{SG} = 3$ symbols, and the PDCCH monitoring occasions in the symbol group all correspond to the symbols #0 to #2.

In some embodiments, the plurality of first PDCCH monitoring occasions are consecutive PDCCH monitoring occasions in a first search space set; or, the plurality of first PDCCH monitoring occasions are consecutive PDCCH monitoring occasions associated with an identical synchronization signal/physical broadcast channel (PBCH) block (SSB) in a first search space set.

It can be understood that, in the embodiments of the present disclosure, the transmission of PDCCH repetition is performed based on the monitoring occasion (MO).

Taking the plurality of first PDCCH monitoring occasions corresponding to the consecutive PDCCH monitoring occasions in the identical search space set as an example, as shown in FIG. 15, for the search space set $s$, when configuring the PDCCH monitoring period as $k_s = 320$, the offset as $o_s = 0$, the number of continuous time slots as $T_s = 2$, and the PDCCH monitoring pattern in the time slot as '10000001000000' and $N_{symb}^{CORESET} = 3$, the terminal device determines that the PDCCH monitoring occasions in the time slots #0 and #1 correspond to the symbols #0 to #2 and #7 to #9. At this time, when the repetition number of the PDCCH transmission is $N_{rep} = 4$, the terminal device determines that the PDCCH monitoring occasions #0 to #3 are used for the transmission of PDCCH repetition.

Taking the plurality of first PDCCH monitoring occasions corresponding to the consecutive PDCCH monitoring occasions associated with the identical SSB in the identical search space set as an example, for reception of the OSI, paging message and PEI, if the transmission of first PDCCH repetition is supported, in a possible implementation, the terminal device monitors second monitoring occasions to receive a first message. The first message includes at least one of the following: the OSI, the paging message, or the PEI. The second monitoring occasions may be a set of $S*X * N_{rep}$ consecutive PDCCH monitoring occasions. The $(n*X*S+x*S+K)$ -th or $(x*N_{rep} *S+n*S+K)$ -th PDCCH monitoring occasion of the second monitoring occasions may correspond to the K-th SSB that is transmitted. Herein, $N_{rep}$ is the repetition number of PDCCH transmission, and n = 0,1,...$N_{rep}$ -1.

Taking the plurality of first PDCCH monitoring occasions corresponding to consecutive PDCCH monitoring occasions associated with the identical SSB in the identical search space set as an example, for the reception of the paging message, when configuring X =1, $S = 4$, $N_{rep}$ = 2 by the higher layer configuration, the terminal device determines that, in the PO, the n*S+K-th monitoring occasion corresponds to the K-th SSB. Herein, the first monitoring occasion or the fifth monitoring occasion (MO) corresponds to the SSB #0; the second monitoring occasion or the sixth monitoring occasion (MO) corresponds to the SSB #1; the third monitoring occasion or the seventh monitoring occasion (MO) corresponds to the SSB #2; and the fourth monitoring occasion or the eighth monitoring occasion (MO) corresponds to the SSB #3.

In the schemes of the transmission of PDCCH repetition according to the embodiments of the present disclosure, the PDCCH monitoring occasions on which the transmission of PDCCH repetition is performed may be located in the identical search space set. Thus, the transmission of PDCCH repetition is performed in the time domain, and the transmission reliability of the PDCCH can be provided.

In some embodiments, the plurality of PDCCH candidates are located at a plurality of first PDCCH monitoring occasions in a plurality of search space sets.

In the embodiments of the present disclosure, the plurality of PDCCH candidates are located at the plurality of first PDCCH monitoring occasions in at least two search space sets. In one example, the plurality of PDCCH candidates are located at the plurality of first PDCCH monitoring occasions on two search space sets. In one example, the plurality of PDCCH candidates are located at the plurality of first PDCCH monitoring occasions in three or more search space sets

It can be understood that the plurality of first PDCCH monitoring occasions at which the plurality of PDCCH candidates used for the transmission of first PDCCH repetition are located may be located in different search space sets. The PDCCH monitoring occasions in the different search space sets may be located at different time-domain positions; and/or, the CORESETs associated with the different search space sets may be located at different frequency-domain positions. In a case where the plurality of PDCCH candidates are the PDCCH candidates located in the different search space sets, the transmission of PDCCH repetition is performed in the time domain and/or the frequency domain.

In some embodiments, for different search space sets in the plurality of search space sets, one or more of the following parameters are configured to be an identical value:

> a PDCCH monitoring period;
> a PDCCH monitoring offset;
> the number of continuous time slots; and
> the number of PDCCH monitoring occasions in a time slot.

In some embodiments, the first PDCCH monitoring occasions in different search space sets have an identical index.

At this time, on the PDCCH monitoring occasions with the identical index in different search space sets, the terminal device monitors the plurality of PDCCH candidates to receive the transmission of first PDCCH repetition; and/or, on the PDCCH monitoring occasions with the identical index in different search space sets, the network device performs the transmission of first PDCCH repetition.

In one example, when the repetition number of first PDCCH transmission is $N_{rep} = 2$, the PDDCH candidates used for the transmission of first PDCCH repetition are located at the PDCCH monitoring occasion in two search space sets $S_i$ and $S_j$. For the search space set $S_i$ and $S_j$, when configuring the PDCCH monitoring period as $k_{si} = k_{sj} = 320$, the offset as $o_{si} = o_{sj} = 0$, the continuous time slots as $T_{si} = T_{sj} = 2$, $N_{symb}^{CORESET} = 3$, as well as the PDCCH monitoring patterns in the time slots to be "1000000000000" and '00000001000000' respectively, as shown in FIG. 16, the terminal device monitors the PDCCH candidates used for the transmission of PDCCH repetition on the monitoring occasion #0 in the search space sets $S_i$ and $S_j$ as well as monitors the PDCCH candidates used for the transmission of PDCCH repetition on the monitoring occasion #1 in the search space sets $S_i$ and $S_j$.

It can be understood that the index of the first PDCCH monitoring occasion in each of different search space sets may be different.

In some embodiments, the repetition number of first PDCCH transmission is determined based on one or more of the following:

> control-resource set (CORESET) configuration information or search space set configuration information; and
> third information in a physical broadcast channel (PBCH).

The repetition number of the first PDCCH transmission may also be described as the repetition number of the transmission of the first PDCCH.

The third information may be a reserved bit in the PBCH.

Taking the repetition number of the first PDCCH transmission being determined based on the CORESET configuration information or the search space set configuration information as an example, the repetition number of the first PDCCH transmission may be provided in the CORESET configuration information or the search space set configuration information.

In one example, in a case where the repetition number of the PDCCH transmission is provided in the configuration information of CORESET0, the terminal device determines the corresponding repetition number of the PDCCH transmission when receiving the configuration information of CORESET0.

In one example, in a case where the repetition number of the PDCCH transmission is provided in the search space set configuration information, the terminal device determines the corresponding repetition number of the PDCCH transmission when receiving the search space set configuration information.

Taking the repetition number of the first PDCCH transmission being determined based on the third information in the PBCH as an example, the repetition number of the first PDCCH transmission is provided in the third information in the PBCH.

In one example, when the information bits $\overline{a}_{\overline{A}+6}$ and $\overline{a}_{\overline{A}+7}$ in the current PBCH are reserved bits, the bit field values '00', '01' and '10' may be used to respectively indicate the repetition number of the PDCCH transmission as 1, 2 and 4.

In some embodiments, the third information is used to indicate whether the repetition number of the first PDCCH transmission indicated by the CORESET configuration information or the search space set configuration information is applied.

Taking the repetition number of the first PDCCH transmission being determined based on the CORESET configuration information or the search space set configuration information and the third information in the PBCH as an example, the third information in the PBCH is used to indicate whether the repetition number of the first PDCCH transmission indicated by the CORESET configuration information or the search space set configuration information is applied.

It can be understood that the third information indicates, based on different values, whether the repetition number of the first PDCCH transmission indicated by the CORESET configuration information or the search space set configuration information is applied.

In one example, the information bit $\overline{a}_{\overline{A}+6}$ in the current PBCH is the reserved bit, which is used for indicating whether the repetition number of the PDCCH transmission in the configuration information of CORESET0 is applied. For example, when $\overline{a}_{\overline{A}+6} = 0$, it is indicated that the repetition number of the PDCCH transmission in the configuration information of CORESET0 is not applied; when $\overline{a}_{\overline{A}+6} = 1$, it is indicated that the repetition number of the PDCCH transmission in the configuration information of CORESET0 is applied.

In some embodiments, the repetition number of the first PDCCH transmission is associated with an index of a PDCCH candidate or an index of a starting control channel element (CCE) corresponding to the PDCCH candidate.

Optionally, based on the index of the PDCCH candidate or the index of the starting CCE corresponding to the PDCCH candidate, the repetition number of the first PDCCH transmission is determined from the candidate values of the repetition number of transmission.

In an example, if the candidate values of the repetition number of PDCCH transmission include $N_{rep} = \{2,4\}$, the index $m_{s,n_{CI}}^{(L)}$ of the of PDCCH candidate corresponds to $N_{rep} = 2$ when the $m_{s,n_{CI}}^{(L)}$ is satisfied $m_{s,n_{CI}}^{(L)} \bmod 2 = 0$; and the index $m_{s,n_{CI}}^{(L)}$, of the of PDCCH candidate corresponds to $N_{rep} = 4$ when the $m_{s,n_{CI}}^{(L)}$ is satisfied $m_{s,n_{CI}}^{(L)} \bmod 2 = 1$. In another example, the index $n_{cce,0}$ of the CCE corresponding to the index of the PDCCH candidate corresponds to $N_{rep} = 2$ when the $n_{cce,0}$ is satisfied $(n_{cce,0} / L) \bmod 2 = 0$; and the index $n_{cce,0}$ of the CCE corresponding to the index of the PDCCH candidate corresponds to $N_{rep} = 4$, when the $n_{cce,0}$ is satisfied $(n_{cce,0} / L) \bmod 2 = 1$.

In some embodiments, for each of the plurality of PDCCH candidates, an index of the PDCCH candidate at a respective first PDCCH monitoring occasion is identical.

For the transmission of first PDCCH repetition, the transmission may be performed through the PDCCH candidates with the identical index at different first PDCCH monitoring occasions. At this time, the network device may send the first PDCCH on the PDCCH candidates with the identical index, and the terminal device may monitor the transmission of first PDCCH repetition on the PDCCH candidates with the identical index at different first PDCCH monitoring occasions. As such, the technical scheme of the transmission of first PDCCH repetition can be simplified, the PDCCH detection complexity can be reduced, and the system transmission efficiency can be improved.

It can be understood that the plurality of PDCCH candidates at the plurality of PDCCH monitoring occasions in the identical search space set or the PDCCH monitoring occasions in different search space sets may correspond to the PDCCH candidates with the identical index.

In one example, when the repetition number of PDCCH transmission is $N_{rep} = 2$, if two PDCCH candidates for the transmission of PDCCH repetition are located at two PDCCH monitoring occasions in the identical search space set, the indexes $m_{s,n_{CI}}^{(L)}$ of the two PDCCH candidates are identical.

In one example, if two PDCCH candidates for the transmission of PDCCH repetition are located at the PDCCH monitoring occasions in different search space sets $S_i$ and $S_j$, the indexes of the two PDCCH candidates are $m_{S_i,n_{CI}}^{(L)} = m_{S_j,n_{CI}}^{(L)}$.

In the embodiments of the present disclosure, for each of the plurality of PDCCH candidates, the index of the PDCCH candidate in the respective first PDCCH monitoring occasion is identical, which can reduce the detection complexity caused by the transmission of PDCCH repetition.

In some embodiments, a monitoring occasion for the transmission of first PDCCH repetition is a union of first PDCCH monitoring occasions at which the plurality of PDCCH candidates are respectively located.

In a case where the plurality of PDCCH candidates are used for the transmission of first PDCCH repetition, the monitoring occasion for the transmission of first PDCCH repetition is the union of the first PDCCH monitoring occasions at which the plurality of PDCCH candidates are respectively located.

It can be understood that, if the transmission of first PDCCH repetition received by the terminal device includes the plurality of PDCCH candidates, the monitoring occasion for the transmission of first PDCCH repetition may be the union of the PDCCH monitoring occasions at which the plurality of PDCCH candidates are located.

It can be understood that the starting position of the transmission of first PDCCH repetition is the starting position of the first PDCCH candidate, and the ending position of the transmission of first PDCCH repetition is the ending position of the last PDCCH candidate.

In some embodiments, in a case where a physical downlink shared channel (PDSCH) or a physical uplink shared channel (PUSCH) is scheduled by the first PDCCH, the time-domain position of the PDSCH or the PUSCH scheduled by the first PDCCH is determined based on the time-domain position of one PDCCH candidate of the plurality of PDCCH candidates for the transmission of first PDCCH repetition.

In some embodiments, the time-domain position of the PDSCH or the PUSCH that is scheduled by the first PDCCH is determined based on the time-domain position of the first PDCCH candidate or the last PDCCH candidate of the plurality of PDCCH candidates.

In the embodiments of the present disclosure, when the transmission of first PDCCH repetition received by the terminal device includes the plurality of PDCCH candidates, the time-domain position of the PDSCH/PUSCH scheduled by the first PDCCH is determined based on the time-domain position of the first PDCCH candidate or the last PDCCH candidate of the plurality of PDCCH candidates.

In one example, when the transmission of first PDCCH repetition is performed based on the monitoring occasion(s) in one search space set or the plurality of search space sets, the time-domain position of the PDSCH/PUSCH scheduled by the first PDCCH may be determined based on the time-domain position of the last PDCCH candidate, thereby ensuring that the terminal device can send and receive data at the correct time-domain position.

In one example, when the transmission of PDCCH repetition is performed based on the monitoring occasion(s) in one search space set or the plurality of search space sets, the time-domain position of the PDSCH/PUSCH scheduled by the first PDCCH may be determined based on the time-domain position of the first PDCCH candidate. As such, the terminal device that only receives the first PDCCH candidate can also send and receive data at the correct time-domain position.

The channel transmission method according to the embodiments of the present disclosure provides the design schemes for time-domain transmission of PDCCH repetition, where the terminal device performs the transmission of PDCCH repetition by monitoring the plurality of PDCCH candidates. Herein:

in a scheme 1), the plurality of PDCCH candidates are located at the plurality of PDCCH monitoring occasions of the identical search space set;
in a scheme 2), the plurality of PDCCH candidates are located at the PDCCH monitoring occasions of different search space sets.

For the above scheme 1),

a) the plurality of PDCCH monitoring occasions exist in one or more time slot groups; or
b) the plurality of PDCCH monitoring occasions exist in one or more symbol groups; or
c) the plurality of PDCCH monitoring occasions correspond to consecutive PDCCH monitoring occasions in the identical search space set or consecutive PDCCH monitoring occasions associated with the identical SSB.

Here, for a) and b) above, the terminal device determines the time slot group or symbol group pattern based on the predefined rule and/or search space set configuration information. At this time, the terminal device can specify the time-domain position of the monitoring occasion for the transmission of PDCCH repetition.

For the above scheme 2), the terminal device can specify the time-domain position of the monitoring occasion for the transmission of PDCCH repetition.

In the embodiments of the present disclosure, the terminal device determines the time-domain position of the scheduled PDSCH/PUSCH based on the time-domain position of the first PDCCH candidate or the last PDCCH candidate, thereby ensuring that the terminal device can send and receive data at the correct time-domain position.

The preferred implementations of the present disclosure are described in detail above with reference to the accompanying drawings. However, the present disclosure is not limited to the specific details in the aforementioned implementations. Within the scope of the technical conception of the present disclosure, a variety of simple modifications may be made to the technical schemes of the present disclosure, and such simple modifications shall fall within the scope of protection of the present disclosure. For example, various specific technical features described in the above specific implementations may be combined in any appropriate way without contradiction. In order to avoid unnecessary repetition, the present disclosure does not further elaborate on various possible combinations. For another example, any combination may be made between various implementations of the present disclosure, as long as the combinations do not contradict the idea of the present disclosure, and the combinations shall also be regarded as the contents of the present disclosure. For yet another example, under the premise of no conflict, various embodiments and/or technical features in the various embodiments described in the present disclosure may be combined with the related art in any manner. The technical schemes acquired after such combinations shall also fall within the scope of protection of the present disclosure.

It should be further understood that, in the various method embodiments of the present disclosure, the size of sequence number if the aforementioned processes does not imply the order of execution. The order of execution of each of the processes should be determined based on functions and inherent logic thereof, and shall not constitute any limitation on the implementation processes in the embodiments of the present disclosure. Furthermore, in the embodiments of the present disclosure, terms "downlink", "uplink" and "sidelink" are used to indicate a transmission direction of a signal or data. Herein, the term "downlink" is used to indicate that the transmission direction of the signal or data is a first direction transmitted from a station to a user device in a cell; the term "uplink" is used to indicate that the transmission direction of the signal or data is a second direction transmitted from the user device in the cell to the station; and the term "sidelink" is used to indicate that the transmission direction of the signal or data is a third direction transmitted from a user device 1 to a user device 2. For example, a "downlink signal" indicates that the transmission direction of the signal is the first direction. Furthermore, in the embodiments of the present disclosure, a term "and/or" is only used to indicate an association relationship for describing associated objects, and indicates that three kinds of relationships may exist. Specifically, "A and/or B" may indicate three cases, i.e., independent existence of A, existence of both A and B, and independent existence of B. Moreover, a character "/" in the present disclosure generally indicates that preceding and following associated objects form an "or" relationship.

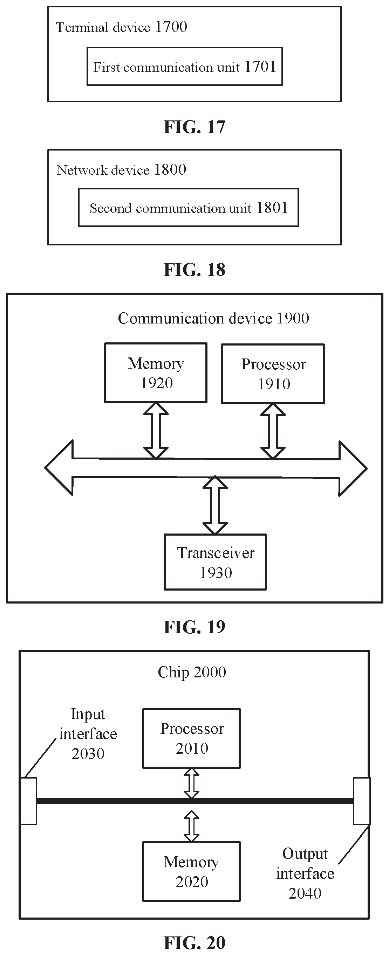

FIG. 17 is a schematic structural diagram of a terminal device according to an embodiment of the present disclosure. As shown in FIG. 17, the terminal device 1700 includes a first communication unit 1701.

The first communication unit 1701 is configured to receive transmission of first physical downlink control channel (PDCCH) repetition, where the transmission of first PDCCH repetition corresponds to a plurality of PDCCH candidates.

In some embodiments, the plurality of PDCCH candidates are located at a plurality of first PDCCH monitoring occasions in an identical search space set.

In some embodiments, the plurality of first PDCCH monitoring occasions are located in one or more time slot groups, the time slot group includes one or more time slots, and the time slot group includes one or more first PDCCH monitoring occasions.

In some embodiments, the number of time slots included in a first time slot group is greater than the number of first PDCCH monitoring occasions included in the first time slot group, and the first time slot group is one of the one or more time slot groups.

Alternatively, the number of time slots included in a first time slot group is equal to the number of first PDCCH monitoring occasions included in the first time slot group.

Alternatively, the number of time slots included in a first time slot group is less than the number of first PDCCH monitoring occasions included in the first time slot group.

In some embodiments, if the plurality of first PDCCH monitoring occasions are located in a plurality of time slot groups, a first time slot in each of different time slot groups is identical, and the first time slot is a time slot in which a first PDCCH monitoring occasion in the time slot group is located.

In some embodiments, an index of a symbol corresponding to a first PDCCH monitoring occasion in each of different first time slots is identical, and the first time slot is a time slot in which the first PDCCH monitoring occasion in the time slot group is located.

In some embodiments, a time-domain position of the one or more first PDCCH monitoring occasions is determined based on one or more of the following in first information:

> a number of time slots included in the time slot group;
> an index of a first time slot in the time slot group, the first time slot being a time slot in which a first PDCCH monitoring occasion in the time slot group is located; and
> a symbol corresponding to the first PDCCH monitoring occasion in the first time slot.

In some embodiments, the first information is determined based on a predefined rule and/or search space set configuration information.

In some embodiments, the plurality of first PDCCH monitoring occasions are located in one or more symbol groups, the symbol group includes one or more symbols, and the symbol group includes one or more first PDCCH monitoring occasions.

In some embodiments, the number of symbols included in the first symbol group is greater than or equal to the number of symbols occupied by a first PDCCH monitoring occasion.

In some embodiments, if the plurality of first PDCCH monitoring occasions are located in a plurality of symbol groups, an index of a symbol corresponding to a first PDCCH monitoring occasion in each of different symbol groups is identical.

In some embodiments, a time-domain position of the one or more first PDCCH monitoring occasions is determined based on one or more of the following in second information:

> a number of symbols included in the symbol group; and
> an index of a first symbol in the symbol group, the first symbol being a symbol in which a first PDCCH monitoring occasion in the symbol group is located.

In some embodiments, the second information is determined based on a predefined rule and/or search space set configuration information.

In some embodiments, the plurality of first PDCCH monitoring occasions are consecutive PDCCH monitoring occasions in a first search space set.

Alternatively, the plurality of first PDCCH monitoring occasions are consecutive PDCCH monitoring occasions associated with an identical synchronization signal/physical broadcast channel (PBCH) block (SSB) in a first search space set.

In some embodiments, the plurality of PDCCH candidates are located at a plurality of first PDCCH monitoring occasions in a plurality of search space sets.

In some embodiments, for different search space sets in the plurality of search space sets, one or more of the following parameters are configured to be an identical value:

> a PDCCH monitoring period;
> a PDCCH monitoring offset;
> a number of continuous time slots; and
> a number of PDCCH monitoring occasions in a time slot.

In some embodiments, the repetition number of first PDCCH transmission is determined based on one or more of the following:

> control-resource set (CORESET) configuration information or search space set configuration information; and
> third information in a physical broadcast channel (PBCH).

In some embodiments, the third information is used to indicate whether the repetition number of first PDCCH transmission indicated by the CORESET configuration information or the search space set configuration information is applied.

In some embodiments, the repetition number of first PDCCH transmission is associated with an index of a PDCCH candidate or an index of a starting control channel element (CCE) corresponding to the PDCCH candidate.

In some embodiments, for each of the plurality of PDCCH candidates, an index of the PDCCH candidate at a respective first PDCCH monitoring occasion is identical.

In some embodiments, a monitoring occasion for the transmission of first PDCCH repetition is a union of first PDCCH monitoring occasions at which the plurality of PDCCH candidates are respectively located.

In some embodiments, a time-domain position of a physical downlink shared channel (PDSCH) or a physical uplink shared channel (PUSCH) that is scheduled by the first PDCCH is determined based on a time-domain position of a first PDCCH candidate or a last PDCCH candidate of the plurality of PDCCH candidates.

It should be noted that the terminal device may further include a first processing unit, and the first processing unit is configured perform the processing such as parsing of the first PDCCH.

The first communication unit of the terminal device may be implemented by a transceiver in the terminal device. The first processing unit of the terminal device may be implemented by a processor in the terminal device.

FIG. 18 is a schematic structural diagram of a network device according to an embodiment of the present disclosure. As shown in FIG. 18, the network device 1800 includes a second communication unit 1801.

The second communication unit 1801 is configured to send transmission of first physical downlink control channel (PDCCH) repetition to a terminal device, where the transmission of first PDCCH repetition corresponding to a plurality of PDCCH candidates.

In some embodiments, the plurality of PDCCH candidates are located at a plurality of first PDCCH monitoring occasions in an identical search space set.

In some embodiments, the plurality of first PDCCH monitoring occasions are located in one or more time slot groups, the time slot group includes one or more time slots, and the time slot group includes one or more first PDCCH monitoring occasions.

In some embodiments, the number of time slots included in a first time slot group is greater than a number of first PDCCH monitoring occasions included in the first time slot group, and the first time slot group is one of the one or more time slot groups.

Alternatively, the number of time slots included in a first time slot group is equal to the number of first PDCCH monitoring occasions included in the first time slot group.

Alternatively, the number of time slots included in a first time slot group is less than the number of first PDCCH monitoring occasions included in the first time slot group.

In some embodiments, if the plurality of first PDCCH monitoring occasions are located in a plurality of time slot groups, a first time slot in each of different time slot groups is identical, and the first time slot is a time slot in which a first PDCCH monitoring occasion in the time slot group is located.

In some embodiments, an index of a symbol corresponding to a first PDCCH monitoring occasion in each of different first time slots is identical, and the first time slot is a time slot in which the first PDCCH monitoring occasion in the time slot group is located.

In some embodiments, a time-domain position of the one or more first PDCCH monitoring occasions is determined based on one or more of the following in first information:

a number of time slots included in the time slot group;
an index of a first time slot in the time slot group, the first time slot being a time slot in which a first PDCCH monitoring occasion in the time slot group is located; and
a symbol corresponding to the first PDCCH monitoring occasion in the first time slot.

In some embodiments, the first information is determined based on a predefined rule and/or search space set configuration information.

In some embodiments, the plurality of first PDCCH monitoring occasions are located in one or more symbol groups, the symbol group includes one or more symbols, and the symbol group includes one or more first PDCCH monitoring occasions.

In some embodiments, the number of symbols included in the first symbol group is greater than or equal to a number of symbols occupied by a first PDCCH monitoring occasion.

In some embodiments, if the plurality of first PDCCH monitoring occasions are located in a plurality of symbol groups, an index of a symbol corresponding to a first PDCCH monitoring occasion in each of different symbol groups is identical.

In some embodiments, a time-domain position of the one or more first PDCCH monitoring occasions is determined based on one or more of the following in second information:

a number of symbols included in the symbol group; and
an index of a first symbol in the symbol group, the first symbol being a symbol in which a first PDCCH monitoring occasion in the symbol group is located.

In some embodiments, the second information is determined based on a predefined rule and/or search space set configuration information.

In some embodiments, the plurality of first PDCCH monitoring occasions are consecutive PDCCH monitoring occasions in a first search space set.

Alternatively, the plurality of first PDCCH monitoring occasions are consecutive PDCCH monitoring occasions associated with an identical synchronization signal/physical broadcast channel (PBCH) block (SSB) in a first search space set.

In some embodiments, the plurality of PDCCH candidates are located at a plurality of first PDCCH monitoring occasions in a plurality of search space sets.

In some embodiments, for different search space sets in the plurality of search space sets, one or more of the following parameters are configured to be an identical value:

    a PDCCH monitoring period;
    a PDCCH monitoring offset;
    a number of continuous time slots; and
    a number of PDCCH monitoring occasions in a time slot.

In some embodiments, the repetition number of first PDCCH transmission is determined based on one or more of the following:

    control-resource set (CORESET) configuration information or search space set configuration information; and
    third information in a physical broadcast channel (PBCH).

In some embodiments, the third information is used to indicate whether the repetition number of first PDCCH transmission indicated by the CORESET configuration information or the search space set configuration information is applied.

In some embodiments, the repetition number of first PDCCH transmission is associated with an index of a PDCCH candidate or an index of a starting control channel element (CCE) corresponding to the PDCCH candidate.

In some embodiments, for each of the plurality of PDCCH candidates, an index of the PDCCH candidate at a respective first PDCCH monitoring occasion is identical.

In some embodiments, a monitoring occasion for the transmission of first PDCCH repetition is a union of first PDCCH monitoring occasions at which the plurality of PDCCH candidates are respectively located.

In some embodiments, a time-domain position of a physical downlink shared channel (PDSCH) or a physical uplink shared channel (PUSCH) that is scheduled by the first PDCCH is determined based on a time-domain position of a first PDCCH candidate or a last PDCCH candidate of the plurality of PDCCH candidates.

It should be noted that the terminal device may further include a second processing unit, and the second processing unit is configured to perform the processing such as generation of the first PDCCH.

The second communication unit of the network device may be implemented by a transceiver in the network device. The first processing unit of the network device may be implemented by a processor in the network device.

Those skilled in the art should understand that the related descriptions of the aforementioned terminal device or network device according to the embodiments of the present disclosure can be understood with reference to the related descriptions of the channel transmission methods according to the embodiments of the present disclosure.

FIG. 19 is a schematic structural diagram of a communication device 1900 according to an embodiment of the present disclosure. The communication device may be a terminal device or a network device. The communication device 1900 shown in FIG. 19 includes a processor 1910, which may call and run a computer program from a memory to implement the method in the embodiments of the present disclosure.

Optionally, as shown in FIG. 19, the communication device 1900 may further include a memory 1920. Herein the processor 1910 may call and run a computer program from the memory 1920 to implement the method in the embodiments of the present disclosure.

Herein the memory 1920 may be a separate device independent of the processor 1910, or may be integrated in the processor 1910.

Optionally, as shown in FIG. 19, the communication device 1900 may further include a transceiver 1930, and the processor 1910 may control the transceiver 1930 to communicate with other devices. Specifically, the transceiver 1930 may transmit information or data to other devices, or may receive information or data from other devices.

Herein, the transceiver 1930 may include a transmitter and a receiver. The transceiver 1930 may further include one or more antennas.

Optionally, the communication device 1900 may specifically be the network device in the embodiments of the present disclosure, and the communication device 1900 may implement the corresponding process implemented by the network device in each of the methods in the embodiments of the present disclosure, which are not repeated herein for the sake of brevity.

Optionally, the communication device 1900 may specifically be the mobile terminal/terminal device in the embodiments of the present disclosure, and the communication device 1900 may implement the corresponding process implemented by the mobile terminal/terminal device in each of the methods in the embodiments of the present disclosure, which are not repeated herein for the sake of brevity.

FIG. 20 is a schematic structural diagram of a chip according to an embodiment of the present disclosure. The chip 2000 shown in FIG. 20 includes a processor 2010, which may call and run a computer program from a memory to implement the method in the embodiments of the present disclosure.

Optionally, as shown in FIG. 20, the chip 2000 may further include a memory 2020. The processor 2010 may call and run a computer program from the memory 2020 to implement the method in the embodiments of the present disclosure.

Herein, the memory 2020 may be a separate device independent of the processor 2010, or may be integrated in the processor 2010.

Optionally, the chip 2000 may further include an input interface 2030. The processor 2010 may control the input interface 2030 to communicate with other devices or chips. Specifically, the input interface 2030 may acquire information or data from other devices or chips.

Optionally, the chip 2000 may further include an output interface 2040. The processor 2010 may control the output interface 2040 to communicate with other devices or chips. Specifically, the output interface 2040 may output information or data to other devices or chips.

Optionally, the chip may be applied to the network device in the embodiments of the present disclosure, and the chip may implement the corresponding process implemented by the network device in each of the methods in the embodiments of the present disclosure, which are not repeated herein for the sake of brevity.

Optionally, the chip may be applied to the mobile terminal/terminal device in the embodiments of the present disclosure, and the chip may implement the corresponding process implemented by the mobile terminal/-terminal device in each of the methods in the embodiments of the present disclosure, which are not repeated herein for the sake of brevity.

It should be understood that the aforementioned chip in the embodiments of the present disclosure may also be referred to as a system level chip, a system chip, a chip system, or a system on chip, etc.

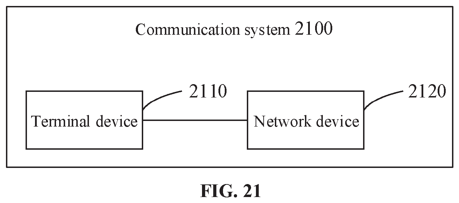

FIG. 21 is a schematic block diagram of a communication system 2100 according to an embodiment of the present disclosure. As shown in FIG. 21, the communication system 2100 includes a terminal device 2110 and a network device 2120.

Herein the terminal device 2110 may be configured to implement the corresponding functions implemented by the terminal device in the above methods, and the network device 2120 may be configured to implement the corresponding functions implemented by the network device in the above methods, which are not repeated herein for the sake of brevity.

It should be understood that the processor in the embodiments of the present disclosure may be an integrated circuit chip having signal processing capability. During the implementation process, each operation of the above method embodiments may be accomplished by an integrated logic circuit of hardware or by an instruction in form of software in the processor. The above processor may be a general purpose processor, a Digital Signal Processor (DSP), an Application Specific Integrated Circuit (ASIC), a Field Programmable Gate Array (FPGA), or other programmable logic device, discrete gate or transistor logic device, discrete hardware component. The processor may implement or perform the methods, operations, and logical block diagrams disclosed in the embodiments of the present disclosure. The general purpose processor may be a microprocessor or any conventional processor or the like. The operations of the methods disclosed in the embodiments of the present disclosure may be directly accomplished by the hardware decoding processor, or be accomplished by a combination of hardware and software modules in the decoding processor. The software module may be located in a Random Access Memory (RAM), a flash memory, a Read-Only Memory (ROM), a Programmable ROM (PROM) or an electrically erasable programmable memory, a register and other storage medium mature in the art. The storage medium is located in the memory, and the processor reads information in the memory to implement the operations of each of the methods above in combination with the hardware.

It may be understood that the memory in the embodiments of the present disclosure may be a transitory memory or a non-transitory memory, or may include both the transitory memory and the non-transitory memory. The non-transitory memory may be a ROM, a PROM, an Erasable PROM (EPROM), an Electrically EPROM (EEPROM), or a flash memory. The transitory memory may be a RAM that used as an external cache. By way of illustration but not limitation, many forms of RAMs may be available, such as a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM), and a Direct Rambus RAM (DR RAM). It should be noted that the memories of the systems and methods described herein are intended to include, but are not limited to, these and any other suitable types of memories.

It should be understood that the above memories are examples but not limiting descriptions. For example, the memory in the embodiments of the present disclosure may also be an SRAM, a DRAM, an SDRAM, a DDR SDRAM, an ESDRAM, an SLDRAM, a DR RAM, and the like. That is, the memory in the embodiments of the present disclosure is intended to include, but is not limited to, these and any other suitable types of memories.

According to an embodiment of the present disclosure, a computer-readable storage medium is further provided. The computer-readable storage medium is configured to store a computer program.

Optionally, the computer-readable storage medium may be applied to the network device in the embodiments of the present disclosure, and the computer program enables a computer to execute the corresponding process implemented by the network device in each of the methods in the embodiments of the present disclosure, which are not repeated herein for the sake of brevity.

Optionally, the computer-readable storage medium may be applied to the mobile terminal/terminal device in the embodiments of the present disclosure, and the computer program enables a computer to execute the corresponding process implemented by the mobile terminal/terminal device in each of the methods in the embodiments of the present disclosure, which are not repeated herein for the sake of brevity.

According to an embodiment of the present disclosure, a computer program product is further provided. The computer program product includes a computer program instruction.

Optionally, the computer program product may be applied to the network device in the embodiments of the present disclosure, and the computer program instruction enables a computer to execute the corresponding process implemented by the network device in each of the methods in the embodiments of the present disclosure, which are not repeated herein for the sake of brevity.

Optionally, the computer program product may be applied to the mobile terminal/terminal device in the embodiments of the present disclosure, and the computer program instruction enables a computer to execute the corresponding process implemented by the mobile terminal/terminal device in each of the methods in the embodiments of the present disclosure, which are not repeated herein for the sake of brevity.

According to an embodiment of the present disclosure, a computer program is further provided.

Optionally, the computer program may be applied to the network device in the embodiments of the present disclosure, and the computer program, when run on a computer, enables the computer to execute the corresponding process implemented by the network device in each of the methods in the embodiments of the present disclosure, which are not repeated herein for the sake of brevity.

Optionally, the computer program may be applied to the mobile terminal/terminal device in the embodiments of the present disclosure, and the computer program, when run on a computer, enables the computer to execute the corresponding process implemented by the mobile terminal/terminal device in each of the methods in the embodiments of the present disclosure, which are not repeated herein for the sake of brevity.

It may be appreciated by those skilled in the art that the various example units and algorithm operations described in conjunction with the embodiments disclosed herein may be implemented in electronic hardware or a combination of computer software and electronic hardware. Whether such functions are performed in hardware or software depends on specific applications and design constraints of the technical scheme. Those skilled may use different methods for specific applications to implement the described functions, but such implementation should not be considered beyond the scope of the present disclosure.

It may be clearly appreciated by those skilled in the art that, for convenience and conciseness of description, regarding the specific operating processes of the systems, apparatuses and units described above, reference may be made to the corresponding processes in the aforementioned method embodiments, which are not repeated herein.

In the several embodiments provided in the present disclosure, it should be understood that the disclosed systems, apparatuses and methods may be implemented by other ways. For example, the apparatus embodiments described above are only illustrative. For example, the division of the units is only a logical functional division, and in practice, there may be other divisions. For example, multiple units or components may be combined or integrated into another system, or some features may be ignored or not performed. In addition, the coupling or direct coupling or communication connection between the units and components illustrated or discussed may be indirect coupling or communication connection through some interfaces, apparatuses or units, and may be electrical, mechanical or other forms.

The units illustrated as separate components may or may not be physically separated, and the components displayed as units may or may not be physical units, i.e., the units and components may be located in one place, or may be distributed over multiple network units. A part or all of the units may be selected according to actual needs, to achieve the purposes of the solutions in the embodiments.

Furthermore, the functional units in the various embodiments of the present disclosure may be integrated in one processing unit, or the units may exist physically individually, or two or more units may be integrated in one unit.

The functions may be stored in a computer-readable storage medium if the functions are implemented in form of software functional units and sold or used as stand-alone products. Based on such understanding, the essence of the technical schemes of the present disclosure, or the part that contributes to the related art, or part of the technical schemes may be embodied in the form of a software product, and such computer software product is stored in a storage medium, and includes several instructions used to enable a computer device (which may be a personal computer, a server, or a network device, etc.) to implement all or part of the operations of the methods described in the various embodiments of the present disclosure. The aforementioned storage medium includes a Universal Serial Bus (USB) flash drive, a removable hard disk, a Read-Only Memory (ROM), a Random Access Memory (RAM), a magnetic disk, an optical disk, or any other medium that may store program codes.

The descriptions above are merely specific embodiments of the present disclosure, but the scope of protection of the present disclosure is not limited thereto. Any change or replacement readily contemplated by those skilled in the art within the technical scope disclosed in the present disclosure shall fall within the scope of protection of the present disclosure. Accordingly, the scope of protection of the present disclosure shall be subject to the scope of protection of the claims.

**Claims**

1. A channel transmission method, comprising:
   receiving, by a terminal device, transmission of first physical downlink control channel (PDCCH) repetition, the transmission of first PDCCH repetition corresponding to a plurality of PDCCH candidates.

2. The method of claim 1, wherein the plurality of PDCCH candidates are located at a plurality of first PDCCH monitoring occasions in an identical search space set.

3. The method of claim 2, wherein the plurality of first PDCCH monitoring occasions are located in one or more time slot groups, the time slot group comprises one or more time slots, and the time slot group comprises one or more first PDCCH monitoring occasions.

4. The method of claim 3, wherein a number of time slots comprised in a first time slot group is greater than a number of first PDCCH monitoring occasions comprised in the first time slot group, and the first time slot group is one of the one or more time slot groups; or,

   a number of time slots comprised in a first time slot group is equal to a number of first PDCCH monitoring occasions comprised in the first time slot group;
   a number of time slots comprised in a first time slot group is less than a number of first PDCCH monitoring occasions comprised in the first time slot group.

5. The method of claim 3 or 4, wherein if the plurality of first PDCCH monitoring occasions are located in a plurality of time slot groups, a first time slot in each of different time slot groups is identical, and the first time slot is a time slot in which a first PDCCH monitoring occasion in the time slot group is located.

6. The method of any one of claims 3 to 5, wherein an index of a symbol corresponding to a first PDCCH monitoring occasion in each of different first time slots is identical, and the first time slot is a time slot in which the first PDCCH monitoring occasion in the time slot group is located.

7. The method of any one of claims 3 to 6, wherein a time-domain position of the one or more first PDCCH monitoring occasions is determined based on one or more of the following in first information:

   a number of time slots comprised in the time slot group;
   an index of a first time slot in the time slot group, the first time slot being a time slot in which a first PDCCH monitoring occasion in the time slot group is located; and
   a symbol corresponding to the first PDCCH monitoring occasion in the first time slot.

8. The method of claim 7, wherein the first information is determined based on a predefined rule and/or search space set configuration information.

9. The method of claim 2, wherein the plurality of first PDCCH monitoring occasions are located in one or more symbol groups, the symbol group comprises one or more symbols, and the symbol group comprises one or more first PDCCH monitoring occasions.

10. The method of claim 9, wherein a number of symbols comprised in a first symbol group is greater than or equal to a number of symbols occupied by a first PDCCH monitoring occasion.

11. The method of claim 9 or 10, wherein if the plurality of first PDCCH monitoring occasions are located in a plurality of symbol groups, an index of a symbol corresponding to a first PDCCH monitoring occasion in each of different symbol groups is identical.

12. The method of any one of claims 9 to 11, wherein a time-domain position of the one or more first PDCCH monitoring occasions is determined based on one or more of the following in second information:

   a number of symbols comprised in the symbol group; and
   an index of a first symbol in the symbol group, the first symbol being a symbol in which a first PDCCH monitoring occasion in the symbol group is located.

13. The method of claim 12, wherein the second information is determined based on a predefined rule and/or search space set configuration information.

14. The method of claim 2, wherein the plurality of first PDCCH monitoring occasions are consecutive PDCCH monitoring occasions in a first search space set; or,
    the plurality of first PDCCH monitoring occasions are consecutive PDCCH monitoring occasions associated with an identical synchronization signal/physical broadcast channel (PBCH) block (SSB) in a first search space set.

15. The method of claim 1, wherein the plurality of PDCCH candidates are located at a plurality of first PDCCH monitoring occasions in a plurality of search space sets.

16. The method of claim 15, wherein for different search space sets in the plurality of search space sets, one or more of the following parameters are configured to be an identical value:

   a PDCCH monitoring period;
   a PDCCH monitoring offset;
   a number of continuous time slots; and
   a number of PDCCH monitoring occasions in a time slot.

17. The method of any one of claims 1 to 16, wherein a repetition number of first PDCCH transmission is determined based on one or more of the following:

   control-resource set (CORESET) configuration information or search space set configuration information; and
   third information in a physical broadcast channel (PBCH).

18. The method of claim 17, wherein the third information is used to indicate whether the repetition number of first PDCCH transmission indicated by the CORESET configuration information or the search space set configuration information is applied.

19. The method of any one of claims 1 to 18, wherein the repetition number of first PDCCH transmission is associated with an index of a PDCCH candidate or an index of a starting control channel element (CCE) corresponding to the PDCCH candidate.

20. The method of any one of claims 1 to 19, wherein for each of the plurality of PDCCH candidates, an index of the PDCCH candidate at a respective first PDCCH monitoring occasion is identical.

21. The method of any one of claims 1 to 20, wherein a monitoring occasion for the transmission of first PDCCH repetition is a union of first PDCCH monitoring occasions at which the plurality of PDCCH candidates are respectively located.

22. The method of any one of claims 1 to 21, wherein a time-domain position of a physical downlink shared channel (PDSCH) or a physical uplink shared channel (PUSCH) that is scheduled by the first PDCCH is determined based on a time-domain position of a first PDCCH candidate or a last PDCCH candidate of the plurality of PDCCH candidates.

23. A channel transmission method, comprising:
sending, by a network device, transmission of first physical downlink control channel (PDCCH) repetition to a terminal device, the transmission of first PDCCH repetition corresponding to a plurality of PDCCH candidates.

24. The method of claim 23, wherein the plurality of PDCCH candidates are located at a plurality of first PDCCH monitoring occasions in an identical search space set.

25. The method of claim 24, wherein the plurality of first PDCCH monitoring occasions are located in one or more time slot groups, the time slot group comprises one or more time slots, and the time slot group comprises one or more first PDCCH monitoring occasions.

26. The method of claim 25, wherein a number of time slots comprised in a first time slot group is greater than a number of first PDCCH monitoring occasions comprised in the first time slot group, and the first time slot group is one of the one or more time slot groups; or,

   a number of time slots comprised in a first time slot group is equal to a number of first PDCCH monitoring occasions comprised in the first time slot group;
   a number of time slots comprised in a first time slot group is less than a number of first PDCCH monitoring occasions comprised in the first time slot group.

27. The method of claim 25 or 26, wherein if the plurality of first PDCCH monitoring occasions are located in a plurality of time slot groups, a first time slot in each of different time slot groups is identical, and the first time slot is a time slot in which a first PDCCH monitoring occasion in the time slot group is located.

28. The method of any one of claims 25 to 27, wherein an index of a symbol corresponding to a first PDCCH monitoring occasion in each of different first time slots is identical, and the first time slot is a time slot in which the first PDCCH monitoring occasion in the time slot group is located.

29. The method of any one of claims 25 to 28, wherein a time-domain position of the one or more first PDCCH monitoring occasions is determined based on one or more of the following in first information:

   a number of time slots comprised in the time slot group;

an index of a first time slot in the time slot group, the first time slot being a time slot in which a first PDCCH monitoring occasion in the time slot group is located; and

a symbol corresponding to the first PDCCH monitoring occasion in the first time slot.

30. The method of claim 29, wherein the first information is determined based on a predefined rule and/or search space set configuration information.

31. The method of claim 24, wherein the plurality of first PDCCH monitoring occasions are located in one or more symbol groups, the symbol group comprises one or more symbols, and the symbol group comprises one or more first PDCCH monitoring occasions.

32. The method of claim 31, wherein a number of symbols comprised in a first symbol group is greater than or equal to the number of symbols occupied by a first PDCCH monitoring occasion.

33. The method of claim 31 or 32, wherein if the plurality of first PDCCH monitoring occasions are located in a plurality of symbol groups, an index of a symbol corresponding to a first PDCCH monitoring occasion in each of different symbol groups is identical.

34. The method of any one of claims 31 to 33, wherein a time-domain position of the one or more first PDCCH monitoring occasions is determined based on one or more of the following in second information:

a number of symbols comprised in the symbol group; and

an index of a first symbol in the symbol group, the first symbol being a symbol in which a first PDCCH monitoring occasion in the symbol group is located.

35. The method of claim 34, wherein the second information is determined based on a predefined rule and/or search space set configuration information.

36. The method of claim 24, wherein the plurality of first PDCCH monitoring occasions are consecutive PDCCH monitoring occasions in a first search space set; or,

the plurality of first PDCCH monitoring occasions are consecutive PDCCH monitoring occasions associated with an identical synchronization signal/physical broadcast channel (PBCH) block (SSB) in a first search space set.

37. The method of claim 23, wherein the plurality of PDCCH candidates are located at a plurality of first PDCCH monitoring occasions in a plurality of search space sets.

38. The method of claim 37, wherein for different search space sets in the plurality of search space sets, one or more of the following parameters are configured to be an identical value:

a PDCCH monitoring period;
a PDCCH monitoring offset;
a number of continuous time slots; and
a number of PDCCH monitoring occasions in a time slot.

39. The method of any one of claims 23 to 38, wherein a repetition number of first PDCCH transmission is determined based on one or more of the following:

control-resource set (CORESET) configuration information or search space set configuration information; and

third information in a physical broadcast channel (PBCH).

40. The method of claim 39, wherein the third information is used to indicate whether the repetition number of first PDCCH transmission indicated by the CORESET configuration information or the search space set configuration information is applied.

41. The method of any one of claims 23 to 40, wherein the repetition number of first PDCCH transmission is associated with an index of a PDCCH candidate or an index of a starting control channel element (CCE) corresponding to the PDCCH candidate.

42. The method of any one of claims 23 to 41, wherein for each of the plurality of PDCCH candidates, an index of the PDCCH candidate at a respective PDCCH monitoring occasion is identical.

43. The method of any one of claims 23 to 42, wherein a monitoring occasion for the transmission of first PDCCH repetition is a union of first PDCCH monitoring occasions at which the plurality of PDCCH candidates are respectively located.

44. The method of any one of claims 23 to 43, wherein a time-domain position of a physical downlink shared channel (PDSCH) or a physical uplink shared channel (PUSCH) that is scheduled by the first PDCCH is determined based on a time-domain position of a first PDCCH candidate or a last PDCCH candidate of the plurality of PDCCH candidates.

45. A terminal device, comprising:
a first communication unit, configured to receive transmission of first physical downlink control channel (PDCCH) repetition, the transmission of first PDCCH repetition corresponding to a plurality of PDCCH candidates.

46. A network device, comprising:
    a second communication unit, configured to send transmission of first physical downlink control channel (PDCCH) repetition to a terminal device, the transmission of first PDCCH repetition corresponding to a plurality of PDCCH candidates.

47. A terminal device, comprising a processor and a memory, wherein the memory is configured to store a computer program therein, and the processor is configured to call and run the computer program stored in the memory to implement the method of any one of claims 1 to 22.

48. A network device, comprising a processor and a memory, wherein the memory is configured to store a computer program therein, and the processor is configured to call and run the computer program stored in the memory to implement the method of any one of claims 23 to 44.

49. A chip, comprising a processor, wherein the processor is configured to call and run a computer program from a memory, to enable a device installed with the chip to implement the method of any one of claims 1 to 22 or the method of any one of claims 23 to 44.

50. A computer-readable storage medium, where the computer-readable storage medium is configured to store a computer program, and the computer program is executed to enable a computer to implement the method of any one of claims 1 to 22 or the method of any one of claims 23 to 44.

51. A computer program product, comprising computer program instructions, wherein the computer program instructions are executed to enable a computer to implement the method of any one of claims 1 to 22 or the method of any one of claims 23 to 44.

52. A computer program, wherein the computer program is executed to enable a computer to implement the method of any one of claims 1 to 22 or the method of any one of claims 23 to 44.

**FIG. 1**

**FIG. 2**

1202

1201

1203

**FIG. 3**

Satellite

Feeder link

Service
link

Gateway

Data
network

**FIG. 4**

Satellite

InterStar link

Feeder link

Feeder link

Data network

Gateway

Service link

**FIG. 5**

A terminal device receives transmission of first physical downlink control channel (PDCCH) repetition, where the transmission of first PDCCH repetition corresponds to a plurality of PDCCH candidates ⎯ S601

**FIG. 6**

A network device sends transmission of first PDCCH repetition to a terminal device, where the transmission of first PDCCH repetition corresponds to a plurality of PDCCH candidates ⎯ S701

**FIG. 7**

| 0 | 1 | 2 | 3 | 4 | 5 | 6 | 7 | 8 | 9 |
|---|---|---|---|---|---|---|---|---|---|

Monitoring    Monitoring                              Monitoring    Monitoring
occasion #0   occasion #1                             occasion #0   occasion #1

Time slot group #0                              Time slot group #1

**FIG. 8**

Time slot #0                                    Time slot #1

| 0 | 1 | 2 | 3 | 4 | 5 | 6 | 7 | 8 | 9 | 10 | 11 | 12 | 13 | 0 | 1 | 2 | 3 | 4 | 5 | 6 | 7 | 8 | 9 | 10 | 11 | 12 | 13 |

Monitoring                                      Monitoring
occasion #0                                     occasion #1

**FIG. 9**

Monitoring window associated with SSB#0 and SSB#1

Monitoring window associated with SSB#0 and SSB#1

Monitoring window associated with SSB#0 and SSB#1

Monitoring window associated with SSB#0 and SSB#1

| 0 | 1 | 2 | 3 | 4 | 5 | 6 | 7 | 8 | 9 | 0 | 1 | 2 | 3 | 4 | 5 | 6 | 7 | 8 | 9 |

Monitoring window associated with SSB#2 and SSB#3

Monitoring window associated with SSB#2 and SSB#3

Monitoring window associated with SSB#2 and SSB#3

Monitoring window associated with SSB#2 and SSB#3

Time slot group #0

Time slot group #1

Time slot group #2

Time slot group #3

**FIG. 10**

Time slot #0

Time slot #1

| 0 | 1 | 2 | 3 | 4 | 5 | 6 | 7 | 8 | 9 | 10 | 11 | 12 | 13 | 0 | 1 | 2 | 3 | 4 | 5 | 6 | 7 | 8 | 9 | 10 | 11 | 12 | 13 |

Monitoring occasion #0

Monitoring occasion #0

Time slot group #0

Time slot group #1

**FIG. 11**

| 0 | 1 | 2 | 3 | 4 | 5 | 6 | 7 | 8 | 9 | 10 | 11 | 12 | 13 |

Monitoring occasion #0

Monitoring occasion #0

Symbol group #0

Symbol group #1

**FIG. 12**

Monitoring
occasion
associated with
SSB#0

Monitoring
occasion
associated with
SSB#0

| 0 | 1 | 2 | 3 | 4 | 5 | 6 | 7 | 8 | 9 | 10 | 11 | 12 | 13 |

Monitoring occasion
associated with
SSB#1

Monitoring occasion
associated with
SSB#1

Symbol group #0        Symbol group #1

**FIG. 13**

Time slot #0

| 0 | 1 | 2 | 3 | 4 | 5 | 6 | 7 | 8 | 9 | 10 | 11 | 12 | 13 |

Monitoring
occasion #0

Monitoring
occasion #0

Time slot
group #0

Time slot
group #1

**FIG. 14**

Time slot #0                                    Time slot #1

| 0 | 1 | 2 | 3 | 4 | 5 | 6 | 7 | 8 | 9 | 10 | 11 | 12 | 13 | 0 | 1 | 2 | 3 | 4 | 5 | 6 | 7 | 8 | 9 | 10 | 11 | 12 | 13 |

Monitoring
occasion #0

Monitoring
occasion #1

Monitoring
occasion #2

Monitoring
occasion #3

**FIG. 15**

Time slot #0                                    Time slot #1

| 0 | 1 | 2 | 3 | 4 | 5 | 6 | 7 | 8 | 9 | 10 | 11 | 12 | 13 | 0 | 1 | 2 | 3 | 4 | 5 | 6 | 7 | 8 | 9 | 10 | 11 | 12 | 13 |

Monitoring
occasion #0
in search
space set $S_i$

Monitoring
occasion #0
in search
space set $S_j$

Monitoring
occasion #1
in search
space set $S_i$

Monitoring
occasion #1
in search
space set $S_j$

**FIG. 16**

Terminal device 1700

First communication unit 1701

**FIG. 17**

Network device 1800

Second communication unit 1801

**FIG. 18**

Communication device 1900

Memory
1920

Processor
1910

Transceiver
1930

**FIG. 19**

Chip 2000

Input
interface
2030

Processor
2010

Memory
2020

Output
interface
2040

**FIG. 20**

Communication system 2100

Terminal device 2110

Network device 2120

**FIG. 21**

## INTERNATIONAL SEARCH REPORT

| | International application No. |
|---|---|
| | **PCT/CN2023/142025** |

| A. | CLASSIFICATION OF SUBJECT MATTER |
|---|---|

H04W 28/04(2009.01)i

According to International Patent Classification (IPC) or to both national classification and IPC

| B. | FIELDS SEARCHED |
|---|---|

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNABS, CNTXT, CNKI, VEN, EPTXT, USTXT, WOTXT, 3GPP: 备选, 传输, 次数, 待选, 多, 发送, 反馈, 候选, 监听时机, 搜索空间, 重复, candidate, dci, pdcch, repeat, transmission

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 116264743 A (VIVO COMMUNICATION TECHNOLOGY CO., LTD.) 16 June 2023 (2023-06-16) description, paragraphs [0029]-[0203] | 1-52 |
| A | CN 114499784 A (DATANG MOBILE COMMUNICATIONS EQUIPMENT CO., LTD.) 13 May 2022 (2022-05-13) entire document | 1-52 |
| A | CN 114826477 A (DATANG MOBILE COMMUNICATIONS EQUIPMENT CO., LTD.) 29 July 2022 (2022-07-29) entire document | 1-52 |
| A | US 2022217694 A1 (LG ELECTRONICS INC.) 07 July 2022 (2022-07-07) entire document | 1-52 |

☐ Further documents are listed in the continuation of Box C.   ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **08 September 2024** | **14 September 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| International application No. |
| --- |
| **PCT/CN2023/142025** |

| Patent document cited in search report | | | Publication date (day/month/year) | Patent family member(s) | | | Publication date (day/month/year) |
| --- | --- | --- | --- | --- | --- | --- | --- |
| CN | 116264743 | A | 16 June 2023 | None | | | |
| CN | 114499784 | A | 13 May 2022 | None | | | |
| CN | 114826477 | A | 29 July 2022 | None | | | |
| US | 2022217694 | A1 | 07 July 2022 | KR | 20230017351 | A | 03 February 2023 |
| | | | | KR | 102514603 | B1 | 27 March 2023 |
| | | | | WO | 2022145882 | A1 | 07 July 2022 |

Form PCT/ISA/210 (patent family annex) (July 2022)